# EUROPEAN PATENT SPECIFICATION

(11) **EP 3 697 115 B1**
(45) Date of publication and mention of the grant of the patent: **13.04.2022**
(21) Application number: 18879702.1
(22) Date of filing: 19.11.2018
(51) Int. Cl.: H04W 4/90, H04W 36/00, H04W 60/00, H04W 36/14, H04W 36/16, H04W 36/24, H04W 76/15, H04W 76/40, H04W 76/50, H04W 84/04, H04L 29/06, H04L 29/08, H04W 88/14

(54) **METHOD AND DEVICE FOR EMERGENCY SERVICE SUPPORT INDICATION**
VERFAHREN UND VORRICHTUNG ZUR ANZEIGE DER NOTDIENSTUNTERSTÜTZUNG
PROCEDE ET DISPOSITIF D'INDICATION DE SOUTIEN AUX SERVICES D'URGENCE

(30) Priority: 20.11.2017 CN 201711158497
(43) Date of publication of application: 19.08.2020
(73) Proprietor: Huawei Technologies Co., Ltd., Longgang District Shenzhen, Guangdong 518129 (CN)
(72) Inventor: CHONG, Weiwei, Shenzhen Guangdong 518129 (CN); WU, Xiaobo, Shenzhen Guangdong 518129 (CN)
(74) Representative: Epping - Hermann - Fischer
(86) International application number: PCT/CN2018/116165
(87) International publication number: WO 2019/096300

(56) References cited:
- WO-A1-2010/124586
- CN-A- 1 941 937
- CN-A- 101 873 560
- CN-A- 101 873 561
- US-A1- 2007 153 986
- US-A1- 2011 171 924
- LG ELECTRONICS ET AL: "(OI#7a) TS 23.502: Adding emergency registration aspect and Emergency Service Support indicator to registration procedure", 3GPP DRAFT; S2-178007_WAS7851_WAS7141_23502-EMERGENCY TO REGISTRATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. SA WG2, no. Ljubljana, Slovenia; 20171023 - 20171027 30 October 2017 (2017-10-30), XP051360624, Retrieved from the Internet: URL:http://www.3gpp.org/ftp/tsg_sa/WG2_Arc h/TSGS2_123_Ljubljana/Docs/ [retrieved on 2017-10-30]

## Description

### TECHNICAL FIELD

This application relates to the communications field, and more specifically, to a service processing method and apparatus in the communications field.

### BACKGROUND

In the wireless communications field, an emergency service has a higher requirement on service timeliness and accuracy than a common service. In fifth generation (5rd generation, 5G) and future network systems, hybrid networking may exist, that is, a core-network network element is connected to different types of access-network network elements. For example, the core-network network element is connected to both a next generation radio access network (next generation wireless access network, NG RAN) device and an evolved universal mobile telecommunications system terrestrial radio access network (evolved universal mobile telecommunications system terrestrial radio access network, EUTRAN) device. In such a hybrid networking scenario, how to initiate an emergency service is a problem that urgently needs to be resolved.

WO2010124586A1 discloses an emergency service implementation method and device. The method comprises: a first network receives an emergency service request from a user equipment. The first network is the network the user equipment is currently located in. The first network which is informed of the request to transfer the user equipment to a second network transfers the user equipment to the second network to implement the emergency service.

### SUMMARY

This application provides a service processing method and apparatus, to help a terminal initiate an emergency service, so that the emergency service can be effectively transmitted.

The invention is defined in the claims. In the following, parts of the description and drawings referring to particular aspects or embodiments of the invention, which are not covered by the claims are not presented as embodiments of the invention, but as examples useful for understanding the invention. According to a first aspect, a service processing method is provided, including: receiving, by a terminal, first indication information, where the first indication information is used to indicate whether at least one type of access-network network element in a first network supports an emergency service; receiving, by the terminal, second indication information, where the second indication information is used to indicate whether a core-network network element in the first network supports the emergency service; and initiating, by the terminal, the emergency service based on the first indication information and/or the second indication information.

In this embodiment of this application, the terminal may initiate the emergency service based on the first indication information indicating whether the at least one type of access-network network element supports the emergency service and/or the second indication information indicating whether the core-network network element supports the emergency service. In this way, this helps the terminal initiate an emergency service, so that the emergency service can be effectively transmitted.

Optionally, the at least one type may be a plurality of types, for example, include a first type and a second type.

In some implementations, the second indication information is specifically used to indicate whether the core-network network element in the first network supports the emergency service in a tracking area list in which the terminal is currently located. In this way, when the terminal is moved to any tracking area in the tracking area list, the terminal may determine, based on the second indication information, whether the core network supports the emergency service. For example, when the second indication information indicates that the core-network network element in the first network supports the emergency service in the tracking area list in which the terminal is currently located, the terminal determines that the core-network network element in the first network supports the emergency service when the terminal is moved to any tracking area in the tracking area list.

In some implementations, the receiving, by a terminal, first indication information includes: receiving, by the terminal, a broadcast message from a first-type access-network network element in the first network, where the broadcast message includes the first indication information, and the first indication information is specifically used to indicate whether the first-type access-network network element supports the emergency service; and the receiving, by the terminal, second indication information includes: receiving, by the terminal, a registration response message from the core-network network element, where the registration response message includes the second indication information.

In this embodiment of this application, when the terminal is moved to a coverage area of the first-type access-network network element in the first network, the terminal may listen to the broadcast message from the first-type access-network network element in the first network, and learn of, from the broadcast message, whether the first-type access-network network element that is in the first network and in which the terminal is currently located supports the emergency service. In a registration process, the terminal may learn of, from the registration response message, whether the core-network network element in the first network supports the emergency service. In this way, the terminal may initiate the emergency service based on the first indication information and the second indication information.

In some implementations, the receiving, by a terminal, first indication information includes: receiving, by the terminal, a registration response message from the core-network network element, where the registration response message includes the first indication information, and the first indication information is specifically used to indicate whether a first-type access-network network element in the first network supports the emergency service and/or whether a second-type access-network network element in the first network supports the emergency service; and the receiving, by the terminal, second indication information includes: receiving, by the terminal, the registration response message from the core-network network element, where the registration response message includes the second indication information.

In some implementations, the initiating, by the terminal, the emergency service based on the first indication information and/or the second indication information includes: if the terminal determines, based on the first indication information, that the first-type access-network network element that is in the first network and in which the terminal is currently located does not support the emergency service, and/or the terminal determines, based on the second indication information, that the core-network network element in the first network does not support the emergency service, and
if the terminal is in an idle mode, reselecting, by the terminal, to a second-type access-network network element, and initiating the emergency service by using the second-type access-network network element, where for example, the terminal may be handed over to the second-type access-network network element, or may reselect to the second-type access-network network element.

In some implementations, the initiating, by the terminal, the emergency service based on the first indication information and the second indication information includes: if the terminal determines, based on the first indication information, that the first-type access-network network element that is in the first network and in which the terminal is currently located does not support the emergency service, and the terminal determines, based on the second indication information, that the core-network network element in the first network supports the emergency service, and if the terminal is in an idle mode, reselecting, by the terminal, to the second-type access-network network element in the first network, and initiating the emergency service by using the second-type access-network network element in the first network.

In some implementations, the initiating, by the terminal, the emergency service based on the first indication information and/or the second indication information includes: if the terminal determines, based on the first indication information, that the first-type access-network network element that is in the first network and in which the terminal is currently located does not support the emergency service, and/or the terminal determines, based on the second indication information, that the core-network network element in the first network does not support the emergency service, and if the terminal is in a data connected mode, moving the terminal to a second-type access-network network element, and initiating, by the terminal, the emergency service by using the second-type access-network network element.

In some implementations, the first-type access-network network element is a fifth-generation radio access network 5G RAN network element, and the second-type access-network network element is an evolved universal mobile telecommunications system terrestrial radio access network EUTRAN network element.

In some implementations, the emergency service is an internet protocol multimedia subsystem IMS emergency call service.

In some implementations, the first network is a 5G network.

According to a second aspect, a service processing method is provided, including: sending, by an access-network network element in a first network, first indication information to a terminal, where the first indication information is used to indicate whether the access-network network element in the first network supports an emergency service. Optionally, the terminal initiates the emergency service based on the first indication information.

In some implementations, the sending, by an access-network network element in a first network, first indication information to a terminal includes: sending, by the access-network network element in the first network, a broadcast message to the terminal, where the broadcast message includes the first indication information.

In some implementations, if the first indication information is used to indicate that a first-type access-network network element in the first network does not support the emergency service, and/or when a core-network network element in the first network does not support the emergency service, the method further includes:
receiving, by the first-type access-network network element in the first network, a first instruction from the core-network network element in the first network, where the first instruction is used to instruct the first-type access-network network element in the first network to trigger a procedure of moving the terminal to a second-type access-network network element; and
moving, by the first-type access-network network element in the first network, the terminal to the second-type access-network network element based on the first instruction.

In some implementations, the method further includes: receiving, by the first-type access-network network element in the first network, second indication information from the core-network network element in the first network, where the second indication information is used to indicate whether the core-network network element in the first network supports the emergency service; and
the triggering, by the first-type access-network network element in the first network based on the first instruction, a procedure of moving the terminal to a second-type access-network network element includes:
triggering, by the access-network network element in the first network based on the first instruction and the second indication information, the procedure of moving the terminal to the second-type access-network network element.

In some implementations, the second indication information is specifically used to indicate whether the core-network network element in the first network supports the emergency service in a tracking area list in which the terminal is currently located.

In some implementations, the triggering, by the access-network network element in the first network based on the first instruction and the second indication information, the procedure of moving the terminal to the second-type access-network network element includes: if the second indication information indicates that the core-network network element in the first network supports the emergency service, triggering, by the access-network network element in the first network, a procedure of moving the terminal to a second-type access-network network element in the first network; or if the second indication information indicates that the core-network network element in the first network does not support the emergency service, triggering, by the access-network network element in the first network, a procedure of moving the terminal to a second-type access-network network element in a second network.

According to a third aspect, a service processing method is provided, including: sending, by a core-network network element in a first network, second indication information to a terminal, where the second indication information is used to indicate whether the core-network network element in the first network supports an emergency service.

In some implementations, the second indication information is specifically used to indicate whether the core-network network element supports the emergency service in a tracking area list in which the terminal is currently located.

Optionally, the second indication information is further used to indicate whether the core-network network element supports the emergency service in a current area.

In some implementations, the sending, by a core-network network element in a first network, second indication information to a terminal includes: sending, by the core-network network element in the first network, a registration response message to the terminal, where the registration response message includes the second indication information.

In some implementations, the method further includes: sending, by the core-network network element in the first network, first indication information to the terminal, where the first indication information is used to indicate whether at least one type of access-network network element in the first network supports the emergency service.

In some implementations, the first indication information is specifically used to indicate whether a first-type access-network network element in the first network supports the emergency service and/or whether a second-type access-network network element in the first network supports the emergency service.

In some implementations, the sending, by the core-network network element in the first network, first indication information to the terminal includes: sending, by the core-network network element in the first network, the registration response message to the terminal, where the registration response message includes the first indication information.

In some implementations, if the first indication information specifically indicates that the first-type access-network network element in the first network does not support the emergency service, or the second indication information is used to indicate that the core-network network element in the first network does not support the emergency service, the core-network network element in the first network receives a fallback request message from the terminal, where the fallback request message is used to request to execute a fallback procedure for the emergency service; and
the core-network network element in the first network sends a first instruction to the first-type access-network network element in the first network based on the fallback request message, where the first instruction is used to instruct the first-type access-network network element in the first network to trigger a procedure of moving the terminal to a second-type access-network network element.

In some implementations, the method further includes: sending, by the core-network network element in the first network, the second indication information to the first-type access-network network element in the first network.

According to a fourth aspect, a service processing method is provided, including: receiving, by a core-network network element in a first network, a registration request message from a terminal; and sending, by the core-network network element in the first network, a registration response message to the terminal, where the registration response message always includes the third indication information, and the third indication information is used to indicate that the first network supports an emergency service.

It should be understood that, that the registration response message always includes the third indication information may be that the registration response message always includes the third indication information regardless of whether the first network supports the emergency service. In other words, when the first network supports the emergency service, the core-network network element in the first network sends the registration response message to the terminal, where the third indication information included in the registration response message is used to indicate that the first network supports the emergency service; or when the first network does not support the emergency service, the core-network network element in the first network sends the registration response message to the terminal, where the third indication information included in the registration response message is used to indicate that the first network supports the emergency service.

In some implementations, before the sending, by the core-network network element in the first network, a registration response message to the terminal, the method further includes: determining, by the core-network network element in the first network, that a terminal that is to initiate or has initiated the emergency service can be moved by the first network to a second-type access-network network element.

In some implementations, the core-network network element in the first network receives the registration request message from the terminal; the core-network network element in the first network determines that the terminal that is to initiate or has initiated the emergency service can be moved by the first network to the second-type access-network network element, and that the second-type access-network network element supports the emergency service; and the core-network network element in the first network sends the registration response message to the terminal, where the registration response message always includes the third indication information, and the third indication information is used to indicate that the first network supports the emergency service.

In some implementations, the determining, by the core-network network element in the first network, that a terminal that is to initiate or has initiated the emergency service can be moved by the first network to a second-type access-network network element includes:
determining, by the core-network network element in the first network, that the terminal that is to initiate or has initiated the emergency service can be handed over or redirected by the first network to the second-type access-network network element.

It should be understood that, that the terminal that is to initiate or has initiated the emergency service can be moved by the first network to the second-type access-network network element may be as follows: The terminal that is to initiate or has initiated the emergency service can be moved by a first-type access-network network element in the first network to the second-type access-network network element; or the terminal that is to initiate or has initiated the emergency service can be moved by the core-network network element in the first network to the second-type access-network network element; or the terminal that is to initiate or has initiated the emergency service can be moved by a first-type access-network network element in the first network and the core-network network element in the first network to the second-type access-network network element.

In some implementations, the method further includes: determining, by the core-network network element in the first network, that the terminal is to initiate or has initiated the emergency service, where the emergency service is to be initiated or has been initiated by the terminal based on the third indication information; and sending, by the core-network network element in the first network, fourth indication information to the first-type access-network network element that is in the first network and in which the terminal is currently located, where the fourth indication information is used to indicate that the terminal is to initiate or has initiated the emergency service, so that the first-type access-network network element in the first network moves the terminal to the second-type access-network network element.

In some implementations, the determining, by the core-network network element in the first network, that the terminal is to initiate or has initiated the emergency service includes: receiving, by the core-network network element in the first network, a session setup request message from the terminal, where the session setup request message is used to request to set up a session for the emergency service; and determining, by the core-network network element in the first network based on the session setup request message, that the terminal is to initiate or has initiated the emergency service.

In some implementations, the determining, by the core-network network element in the first network, that the terminal is to initiate or has initiated the emergency service includes: receiving, by the core-network network element in the first network, a first message from a session management network element in the first network, where the first message is used to establish a user plane tunnel for the emergency service; and determining, by the core-network network element in the first network based on the first message, that the terminal is to initiate or has initiated the emergency service.

In some implementations, the method further includes: sending, by the core-network network element in the first network, fifth indication information to the first-type access-network network element in the first network, where the fifth indication information is used to indicate whether the core-network network element in the first network supports the emergency service.

According to a fifth aspect, a service processing method is provided, including: determining, by a first-type access-network network element in a first network, that a terminal is to initiate or has initiated an emergency service; and triggering, by the first-type access-network network element in the first network, a procedure of moving the terminal to a second-type access-network network element.

In some implementations, before the triggering, by the first-type access-network network element in the first network, a procedure of moving the terminal to a second-type access-network network element, the method further includes: determining, by the first-type access-network network element in the first network, that the first network does not support the emergency service.

In some implementations, the determining, by the first-type access-network network element in the first network, that the first network does not support the emergency service includes: determining, by the first-type access-network network element in the first network, that the first-type access-network network element in the first network does not support the emergency service and/or a core-network network element in the first network does not support the emergency service.

In some implementations, the method further includes: sending, by the first-type access-network network element in the first network, a broadcast message to the terminal, where the broadcast message includes third indication information, and the third indication information is used to indicate that the first network supports the emergency service. Optionally, the terminal initiates the emergency service based on the third indication information.

Optionally, that the first network supports the emergency service includes that the core-network network element in the first network supports the emergency service and an access-network network element in the first network supports the emergency service.

In some implementations, before the sending, by the first-type access-network network element in the first network, a broadcast message to the terminal, the method further includes: determining, by the first-type access-network network element in the first network, that the terminal that is to initiate or has initiated the emergency service can be moved by the first network to the second-type access-network network element.

In some implementations, the method further includes: receiving, by the first-type access-network network element in the first network, fourth indication information from the core-network network element in the first network, where the fourth indication information is used to indicate that the terminal has initiated or is to initiate the emergency service; and the determining, by a first-type access-network network element in a first network, that the terminal is to initiate or has initiated the emergency service includes: determining, by the first-type access-network network element in the first network based on the fourth indication information, that the terminal is to initiate or has initiated the emergency service.

In some implementations, the method further includes: receiving, by the first-type access-network network element in the first network, fifth indication information from the core-network network element in the first network, where the fifth indication information is used to indicate whether the core-network network element in the first network supports the emergency service; and
the triggering, by the first-type access-network network element in the first network, a procedure of moving the terminal to a second-type access-network network element includes: triggering, by the first-type access-network network element in the first network based on the fifth indication information, the procedure of moving the terminal to the second-type access-network network element.

In some implementations, the triggering, by the first-type access-network network element in the first network based on the fifth indication information, the procedure of moving the terminal to the second-type access-network network element includes: if the fifth indication information is used to indicate that the core-network network element in the first network supports the emergency service, triggering, by the first-type access-network network element in the first network, a procedure of moving the terminal to a second-type access-network network element in the first network; or if the fifth indication information is used to indicate that the core-network network element in the first network does not support the emergency service, triggering, by the first-type access-network network element in the first network, a procedure of moving the terminal to a second-type access-network network element in a second network.

In some implementations, the first-type access-network network element is a fifth-generation radio access network 5G RAN network element, and the second-type access-network network element is an evolved universal mobile telecommunications system terrestrial radio access network EUTRAN network element.

According to a sixth aspect, a service processing apparatus is provided, configured to perform the method in any one of the first aspect or the possible implementations of the first aspect. Specifically, the apparatus includes units configured to perform the method in any one of the first aspect or the possible implementations of the first aspect.

According to a seventh aspect, a service processing apparatus is provided, configured to perform the method in any one of the second aspect or the possible implementations of the second aspect. Specifically, the apparatus includes units configured to perform the method in any one of the second aspect or the possible implementations of the second aspect.

According to an eighth aspect, a service processing apparatus is provided, configured to perform the method in any one of the third aspect or the possible implementations of the third aspect. Specifically, the apparatus includes units configured to perform the method in any one of the third aspect or the possible implementations of the third aspect.

According to a ninth aspect, a service processing apparatus is provided, configured to perform the method in any one of the fourth aspect or the possible implementations of the fourth aspect. Specifically, the apparatus includes units configured to perform the method in any one of the fourth aspect or the possible implementations of the fourth aspect.

According to a tenth aspect, a service processing apparatus is provided, configured to perform the method in any one of the fifth aspect or the possible implementations of the fifth aspect. Specifically, the apparatus includes units configured to perform the method in any one of the fifth aspect or the possible implementations of the fifth aspect.

According to an eleventh aspect, a service processing apparatus is provided, where the apparatus includes a transceiver (which may include a transmitter and a receiver), a memory, and a processor. The transceiver, the memory, and the processor communicate with each other by using an internal connection path. The memory is configured to store an instruction. The processor is configured to execute the instruction stored in the memory, to control the receiver to receive a signal and control the transmitter to send a signal, so as to enable the apparatus to perform the method in any one of the first aspect or the possible implementations of the first aspect.

According to a twelfth aspect, a service processing apparatus is provided, where the apparatus includes a transceiver (which may include a transmitter and a receiver), a memory, and a processor. The transceiver, the memory, and the processor communicate with each other by using an internal connection path. The memory is configured to store an instruction. The processor is configured to execute the instruction stored in the memory, to control the receiver to receive a signal and control the transmitter to send a signal, so as to enable the apparatus to perform the method in any one of the second aspect or the possible implementations of the second aspect.

According to a thirteenth aspect, a service processing apparatus is provided, where the apparatus includes a transceiver (which may include a transmitter and a receiver), a memory, and a processor. The transceiver, the memory, and the processor communicate with each other by using an internal connection path. The memory is configured to store an instruction. The processor is configured to execute the instruction stored in the memory, to control the receiver to receive a signal and control the transmitter to send a signal, so as to enable the apparatus to perform the method in any one of the third aspect or the possible implementations of the third aspect.

According to a fourteenth aspect, a service processing apparatus is provided, where the apparatus includes a transceiver (which may include a transmitter and a receiver), a memory, and a processor. The transceiver, the memory, and the processor communicate with each other by using an internal connection path. The memory is configured to store an instruction. The processor is configured to execute the instruction stored in the memory, to control the receiver to receive a signal and control the transmitter to send a signal, so as to enable the apparatus to perform the method in any one of the fourth aspect or the possible implementations of the fourth aspect.

According to a fifteenth aspect, a service processing apparatus is provided, where the apparatus includes a transceiver (which may include a transmitter and a receiver), a memory, and a processor. The transceiver, the memory, and the processor communicate with each other by using an internal connection path. The memory is configured to store an instruction. The processor is configured to execute the instruction stored in the memory, to control the receiver to receive a signal and control the transmitter to send a signal, so as to enable the apparatus to perform the method in any one of the fifth aspect or the possible implementations of the fifth aspect.

According to a sixteenth aspect, a service processing system is provided, including the apparatus in any one of the sixth aspect or the optional implementations of the sixth aspect, the apparatus in any one of the seventh aspect or the optional implementations of the seventh aspect, and the apparatus in any one of the eighth aspect or the optional implementations of the eighth aspect. Optionally, the system includes the apparatus in any one of the eleventh aspect or the optional implementations of the eleventh aspect, the apparatus in any one of the twelfth aspect or the optional implementations of the twelfth aspect, and the apparatus in any one of the thirteenth aspect or the optional implementations of the thirteenth aspect.

According to a seventeenth aspect, a computer readable storage medium is provided, where the computer readable storage medium stores an instruction, and when the instruction is run on a computer, the computer is enabled to perform the method in any one of the first aspect or the possible implementations of the first aspect.

According to an eighteenth aspect, a computer readable storage medium is provided, where the computer readable storage medium stores an instruction, and when the instruction is run on a computer, the computer is enabled to perform the method in any one of the second aspect or the possible implementations of the second aspect.

According to a nineteenth aspect, a computer readable storage medium is provided, where the computer readable storage medium stores an instruction, and when the instruction is run on a computer, the computer is enabled to perform the method in any one of the third aspect or the possible implementations of the third aspect.

According to a twentieth aspect, a computer readable storage medium is provided, where the computer readable storage medium stores an instruction, and when the instruction is run on a computer, the computer is enabled to perform the method in any one of the fourth aspect or the possible implementations of the fourth aspect.

According to a twenty-first aspect, a computer readable storage medium is provided, where the computer readable storage medium stores an instruction, and when the instruction is run on a computer, the computer is enabled to perform the method in any one of the fifth aspect or the possible implementations of the fifth aspect.

According to a twenty-second aspect, this application provides a computer program product that includes an instruction, where when the computer program product is run on a computer, the computer is enabled to perform the method in any one of the first aspect or the possible implementations of the first aspect.

According to a twenty-third aspect, this application provides a computer program product that includes an instruction, where when the computer program product is run on a computer, the computer is enabled to perform the method in any one of the second aspect or the possible implementations of the second aspect.

According to a twenty-fourth aspect, this application provides a computer program product that includes an instruction, where when the computer program product is run on a computer, the computer is enabled to perform the method in any one of the third aspect or the possible implementations of the third aspect.

According to a twenty-fifth aspect, this application provides a computer program product that includes an instruction, where when the computer program product is run on a computer, the computer is enabled to perform the method in any one of the fourth aspect or the possible implementations of the fourth aspect.

According to a twenty-sixth aspect, this application provides a computer program product that includes an instruction, where when the computer program product is run on a computer, the computer is enabled to perform the method in any one of the fifth aspect or the possible implementations of the fifth aspect.

According to a twenty-seventh aspect, this application provides a communications chip, where the communications chip stores an instruction, and when the instruction is run on a terminal, an access-network network element, or a core-network network element, the terminal, the access-network network element, or the core-network network element is enabled to perform any method in the foregoing aspects.

### BRIEF DESCRIPTION OF DRAWINGS

FIG 1 is a schematic diagram of a system framework according to an embodiment of this application;
FIG 2 is a schematic diagram of network communication according to an embodiment of this application;
FIG 3 is a schematic diagram of a service processing method according to an embodiment of this application;
FIG 4 is a schematic diagram of another service processing method according to an embodiment of this application;
FIG 5 is a schematic diagram of still another service processing method according to an embodiment of this application;
FIG 6 is a schematic diagram of still another service processing method according to an embodiment of this application;
FIG 7 is a schematic diagram of still another service processing method according to an embodiment of this application;
FIG 8 is a schematic diagram of still another service processing method according to an embodiment of this application;
FIG. 9 is a schematic diagram of still another service processing method according to an embodiment of this application;
FIG. 10 is a schematic diagram of still another service processing method according to an embodiment of this application;
FIG. 11 is a schematic diagram of still another service processing method according to an embodiment of this application;
FIG. 12 is a schematic diagram of still another service processing method according to an embodiment of this application;
FIG. 13 is a schematic diagram of still another service processing method according to an embodiment of this application;
FIG. 14 is a schematic block diagram of a service processing apparatus according to an embodiment of this application;
FIG. 15 is a schematic block diagram of another service processing apparatus according to an embodiment of this application;
FIG. 16 is a schematic block diagram of still another service processing apparatus according to an embodiment of this application;
FIG. 17 is a schematic block diagram of still another service processing apparatus according to an embodiment of this application;
FIG. 18 is a schematic block diagram of still another service processing apparatus according to an embodiment of this application;
FIG. 19 is a schematic block diagram of still another service processing apparatus according to an embodiment of this application;
FIG. 20 is a schematic block diagram of still another service processing apparatus according to an embodiment of this application;
FIG. 21 is a schematic block diagram of still another service processing apparatus according to an embodiment of this application;
FIG. 22 is a schematic block diagram of still another service processing apparatus according to an embodiment of this application; and
FIG. 23 is a schematic block diagram of still another service processing apparatus according to an embodiment of this application.

### DESCRIPTION OF EMBODIMENTS

The following describes the technical solutions of this application with reference to the accompanying drawings.

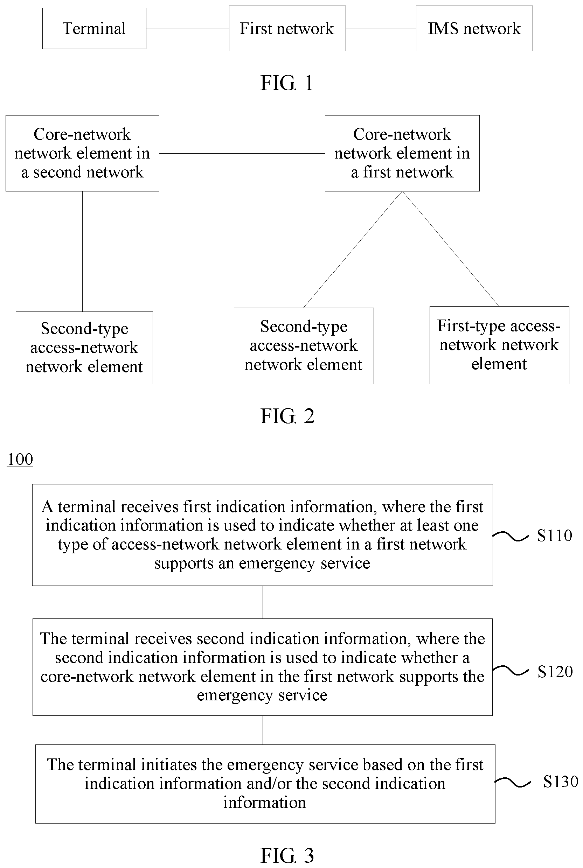

FIG. 1 is a schematic diagram of a system framework according to an embodiment of this application. The system framework includes a terminal, a first network, and an internet protocol multimedia subsystem (IP Multimedia Subsystem, IMS) network.

The terminal may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, a terminal in a future 5G network, a terminal in a future evolved public land mobile network (Public Land Mobile Network, PLMN), or the like. This is not limited in this embodiment of this application.

The first network may be a network in a communications system, for example, a network in a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a wireless local area network (wireless local area network, WLAN) system, a fifth-generation (the fifth Generation, 5G) wireless communications system, or a future wireless communications system.

The first network may include a core-network network element and an access-network network element.

The access-network network element may be a base station controller (base station controller, BSC) in a global system for mobile communications (global system of mobile communication, GSM) or code division multiple access (code division multiple access, CDMA), or may be a radio node controller (radio node controller, RNC) in WCDMA, or may be an evolved NodeB (evolved nodeB, eNB or e-NodeB) in LTE, or may be a new type of base station (for example, an evolved LTE NodeB, eLTE NB, or a next generation nodeB, gNB) in a 5G network, or may be a base station in a future wireless communications system. The access-network network element may be a shared access-network network element, for example, may be an access-network network element shared by a plurality of public land mobile networks (public land mobile network, PLMN).

The core-network network element may be an access and mobility management function (access and mobility management function, AMF) network element, a mobility management entity (mobility management entity, MME), a session management function (session management function, SMF) network element, a user plane function (User plane function, UPF) network element, a serving gateway (serving gateway, SGW), a packet data network gateway (packet data networks gateway, PGW), a policy control function (policy control function, PCF) network element, or a home subscriber server (home subscriber server, HSS) that may also be referred to as a subscription database, or a serving general packet radio service (general packet radio service, GPRS) support node (serving GPRS support node, SGSN), or a gateway general packet radio service support node (Gateway general packet radio service support node, GGSN).

In this embodiment of this application, the terminal may initiate a registration procedure to the first network, and then the terminal initiates setup of a session related to an emergency service to the first network. The first network establishes a tunnel for the emergency service based on the session related to the emergency service, the terminal initiates an emergency service request message to the IMS network through the tunnel established by the first network, and the IMS network provides the emergency service for the terminal based on the emergency service request message.

FIG. 2 is a schematic diagram of network communication according to an embodiment of this application. A first network and a second network may communicate with each other. The first network includes a core-network network element in the first network, a first-type access-network network element, and a second-type access-network network element connected to the core-network network element in the first network. A combination mode of the core-network network element in the first network, the first-type access-network network element, and the second-type access-network network element connected to the core-network network element in the first network may be referred to as hybrid networking. Hybrid networking means that one core-network network element is connected to two types of different access-network network elements. The second network includes a core-network network element in the second network and a second-type access-network network element connected to the core-network network element in the second network. For example, the first network may be a 5G network, and the second network may be a 4G network. This is not limited in this embodiment of this application.

For example, the first-type access-network network element may be a 5G access-network network element (also referred to as an NG RAN), and the second-type access-network network element may be an EUTRAN. For example, the core-network network element in the first network may be a 5G core (fifth generation core, 5GC) network device, and the core-network network element in the second network may be an evolved packet core (evolved packet core, EPC) device.

In actual application, it is possible that the first-type access-network network element does not support an emergency service and the second-type access-network network element supports the emergency service. When a terminal initiates the emergency service in the first-type access-network network element, how to ensure that the terminal can effectively initiate the emergency service and how a network provides the emergency service for the terminal are problems that need to be resolved in this embodiment of this application.

For example, in this embodiment of this application, when the first-type access-network network element does not support an emergency service, the second-type access-network network element supports the emergency service, and the terminal initiates the emergency service within a coverage area of the first-type access-network network element, because the first-type access-network network element does not support the emergency service, the first-type access-network network element may move the terminal to the second-type access-network network element that supports the emergency service. The first-type access-network network element may move the terminal to the second-type access-network network element connected to the core-network network element in the first network, or may move the terminal to the second-type access-network network element connected to the core network in the second network. Further, when the core-network network element in the first network supports the emergency service, the terminal is preferably moved to the second-type access-network network element in the first network; or when the core-network network element in the first network does not support the emergency service, the terminal is moved to the second-type access-network network element in the second network. In this way, accuracy of initiating the emergency service by the terminal can be improved.

The following describes a service processing method in the embodiments of this application with reference to the accompanying drawings.

FIG. 3 shows a service processing method 100 according to an embodiment of this application. The method 100 includes the following steps.

S110. A terminal receives first indication information, where the first indication information is used to indicate whether at least one type of access-network network element in a first network supports an emergency service. Optionally, the first network may include a core-network network element in the first network, a first-type access-network network element in the first network, and a second-type access-network network element in the first network.

It should be understood that the at least one type may be a plurality of types, for example, include a first type and a second type.

Optionally, the first-type access-network network element sends the first indication information to the terminal, and S110 includes: receiving, by the terminal, the first indication information from the first-type access-network network element, where the first indication information is used to indicate whether the first-type access-network network element supports the emergency service. Optionally, the first-type access-network network element sends a broadcast message to the terminal, where the broadcast message includes the first indication information. The terminal receives the broadcast message from the first-type access-network network element, and obtains the first indication information from the broadcast message.

Optionally, the second-type access-network network element sends the first indication information to the terminal, and S110 includes: receiving, by the terminal, the first indication information from the second-type access-network network element, where the first indication information is used to indicate whether the second-type access-network network element supports the emergency service. Optionally, the second-type access-network network element sends a broadcast message to the terminal, where the broadcast message includes the first indication information. The terminal receives the broadcast message from the second-type access-network network element, and obtains the first indication information from the broadcast message.

Optionally, the core-network network element in the first network sends the first indication information to the terminal, and S110 includes: receiving, by the terminal, the first indication information from the core-network network element in the first network, where the first indication information is used to indicate whether the at least one type of access-network network element in the first network supports the emergency service. For example, the first indication information is used to indicate whether the first-type access-network network element in the first network supports the emergency service, and/or the first indication information is used to indicate whether the second-type access-network network element in the first network supports the emergency service. To be specific, the first indication information may indicate whether only one type of access-network network element supports the emergency service, or may indicate whether each of the two types of access-network network elements supports the emergency service. This is not limited in this embodiment of this application. The terminal may send a registration request message to the core-network network element in the first network, where the registration request message is used to request to register with the core-network network element in the first network. Optionally, the sending, by the core-network network element in the first network, the first indication information to the terminal includes: sending, by the core-network network element in the first network, a registration response message to the terminal, where the registration response message includes the first indication information. The terminal receives the registration response message from the core-network network element in the first network, and the terminal obtains the first indication information from the registration response message.

Optionally, the emergency service may be an IMS emergency call service.

It should be understood that the at least one type may include a plurality of types. For ease of description, the first type and the second type are only used as examples for description in this embodiment of this application.

In a possible implementation, in a network planning process, different types of access-network network elements may be included in a same tracking area (tracking area, TA) list (list) through planning. When the terminal is moved in TAs included in a same TA list, the terminal only needs to initiate a registration request message to a network device in a TA in which the terminal is located when the terminal accesses a network for the first time. When returning a registration response message to the terminal, the network device may add, into the registration response message, indication information indicating whether a network side supports the emergency service in a current TA. The terminal may determine, based on the indication information, whether to initiate the emergency service. However, it is possible that in different TAs in a same TA list, some types of access-network network elements support the emergency service and some types of access-network network elements do not support the emergency service. For example, when the terminal is in a current first TA, the indication information indicates that the first-type access-network network element supports the emergency service. When the terminal is moved from the current first TA to a second TA, it is possible that the first-type access-network network element does not support the emergency service in the next second TA, but the terminal still considers that the first-type access-network network element supports the emergency service in the second TA. Consequently, the terminal still sends an emergency service request to the first-type access-network network element in the second TA, and the first-type access-network network element does not respond to the request of the terminal, causing a failure of initiating the emergency service. In this embodiment of this application, the first-type access-network network element may send the first indication information to indicate, to the terminal, whether the first-type access-network network element supports the emergency service. The second-type access-network network element may also send the first indication information to indicate, to the terminal, whether the second-type access-network network element supports the emergency service. In this way, when the terminal is moved to the first-type access-network network element, the terminal may obtain the first indication information from the first-type access-network network element; or when the terminal is moved to the second-type access-network network element, the terminal may obtain the first indication information from the second-type access-network network element. Therefore, the terminal can accurately initiate the emergency service in a current TA. For example, when the terminal is in a data connected mode, the terminal may initiate the emergency service to an access-network network element that supports the emergency service, and does not initiate the emergency service to an access-network network element that does not support the emergency service.

Still further, the core-network network element in the first network may send the first indication information to the terminal. The first indication information may indicate whether the first-type access-network network element in the first network supports the emergency service, or may indicate whether the second-type access-network network element supports the emergency service. In this way, when the terminal is moved to a coverage area of any type of access-network network element, the terminal may determine, based on the first indication information, whether an access-network network element in which the terminal is currently located supports the emergency service, so that the terminal can accurately initiate the emergency service, to avoid a failure of the emergency service.

S120. The terminal receives second indication information, where the second indication information is used to indicate whether the core-network network element in the first network supports the emergency service.

Optionally, the core-network network element in the first network sends the second indication information to the terminal, and S120 includes: receiving, by the terminal, the second indication information from the core-network network element in the first network. Optionally, the sending, by the core-network network element in the first network, the second indication information to the terminal includes: sending, by the core-network network element in the first network, the registration response message to the terminal, where the registration response message includes the second indication information. The receiving, by the terminal, the second indication information from the core-network network element in the first network includes: receiving, by the terminal, the registration response message from the core-network network element in the first network, and obtaining, by the terminal, the second indication information from the registration response message.

Optionally, the second indication information is specifically used to indicate whether the core-network network element supports the emergency service in a TA list in which the terminal is currently located. In a possible implementation, when accessing the network for the first time, the terminal initiates the registration request message to the core-network network element in the TA in which the terminal is located. When returning the registration response message to the terminal, the core-network network element may add, into the registration response message, indication information indicating whether the core-network network element supports the emergency service in the current TA. The terminal may determine, based on the indication information, whether to initiate the emergency service. However, when the terminal is moved from the current first TA to the next second TA, it is possible that the core-network network element does not support the emergency service in the next second TA, but the terminal still considers that the core-network network element supports the emergency service. Consequently, the terminal still initiates the emergency service to the network in the second TA, and the core network element does not respond to the emergency service of the terminal, causing a failure of initiating the emergency service. In this embodiment of this application, whether the core-network network element supports the emergency service in the TA list instead of a single TA is indicated. In this way, when the terminal is moved to any TA, the terminal may accurately determine whether to initiate the emergency service, thereby improving accuracy of initiating the emergency service.

It should be understood that, that the second indication information may indicate whether the core-network network element supports the emergency service in a TA list in which the terminal is currently located may be understood as follows: The second indication information indicates that the core-network network element in the first network supports the emergency service or does not support the emergency service in the TA list in which the terminal is currently located.

Optionally, the second indication information may alternatively indicate whether the core network element in the first network supports the emergency service in an entire network.

S130. The terminal initiates the emergency service based on the first indication information and/or the second indication information.

Optionally, that the terminal may determine, based on the first indication information and/or the second indication information, whether to initiate the emergency service specifically falls into the following two cases: the terminal is in an idle mode and the terminal is in the data connected mode. For example, when the terminal is in the idle mode, the following several cases are described:
In a first case, S130 includes: if the terminal determines, based on the first indication information, that the first-type first access-network network element in which the terminal is currently located supports the emergency service, and the terminal determines, based on the second indication information, that the core-network network element in which the terminal is located supports the emergency service, initiating, by the terminal, the emergency service based on the first indication information and the second indication information by using the first access-network network element.

In a second case, S130 includes: if the terminal determines, based on the first indication information, that the first-type access-network network element that is in the first network and in which the terminal is currently located does not support the emergency service, and/or the terminal determines, based on the second indication information, that the core-network network element in the first network does not support the emergency service, reselecting, by the terminal, to a second-type access-network network element, and initiating the emergency service by using the second-type access-network network element.

Specifically, if the terminal determines, based on the first indication information, that the first-type access-network network element that is in the first network and in which the terminal is currently located does not support the emergency service, and the terminal determines, based on the second indication information, that the core-network network element in the first network does not support the emergency service, the terminal reselects to a second-type access-network network element in a second network, and initiates the emergency service by using the second-type access-network network element in the second network.

In a third case, S130 includes: if the terminal determines, based on the first indication information, that the first-type access-network network element that is in the first network and in which the terminal is currently located does not support the emergency service, and the terminal determines, based on the second indication information, that the core-network network element in the first network supports the emergency service, reselecting, by the terminal, to the second-type access-network network element in the first network, and initiating the emergency service by using the second-type access-network network element in the first network.

When the terminal is in the data connected mode, S130 includes: if the terminal determines, based on the first indication information, that the first-type access-network network element that is in the first network and in which the terminal is currently located does not support the emergency service, and/or the terminal determines, based on the second indication information, that the core-network network element in the first network does not support the emergency service, moving the terminal to a second-type access-network network element, and initiating, by the terminal, the emergency service by using the second-type access-network network element.

Specifically, when the terminal is in the data connected mode, if the terminal determines, based on the first indication information, that the first-type access-network network element does not support the emergency service, or the terminal determines, based on the second indication information, that the core-network network element in the first network does not support the emergency service, or the terminal determines, based on the first indication information and the second indication information, that neither the first-type access-network network element nor the core-network network element in the first network supports the emergency service, the terminal needs to be moved to a second-type access-network network element, for example, the terminal may be moved to a default second-type access-network network element.

Optionally, the terminal may send a fallback request message to the core-network network element in the first network, where the fallback request message is used to request the core-network network element in the first network to move (or may be referred to as "fall back") the terminal. The core-network network element in the first network receives the fallback request message, and the core-network network element in the first network sends a first instruction to the first-type core-network network element based on the fallback request message. The first instruction is used to instruct the first-type access-network network element in the first network to trigger a procedure of moving the terminal to a second-type access-network network element. The first-type access-network network element in the first network moves the terminal to the second-type access-network network element based on the first instruction. For example, the first-type access-network network element in the first network may move the terminal to a default second-type access-network network element, and the default second-type access-network network element may be an access-network network element in the second network. Alternatively, the core-network network element in the first network may send second indication information to the first-type access-network network element to indicate whether the core-network network element in the first network supports the emergency service. The first-type access-network network element in the first network may trigger, based on the first instruction and the second indication information, the procedure of moving the terminal to the second-type access-network network element.

Specifically, if the second indication information indicates that the core-network network element in the first network supports the emergency service, the access-network network element in the first network triggers the procedure of moving the terminal to the second-type access-network network element in the first network. If the second indication information indicates that the core-network network element in the first network does not support the emergency service, the access-network network element in the first network triggers the procedure of moving the terminal to the second-type access-network network element in the second network.

Therefore, in this embodiment of this application, the terminal may initiate the emergency service based on the first indication information and/or the second indication information. The first indication information and the second indication information help the terminal initiate the emergency service, so that the service can be effectively transmitted. In addition, the first-type access-network network element in the first network may send the first indication information to indicate whether the first-type access-network network element supports the emergency service, or the second-type access-network network element in the first network may send the first indication information to indicate whether the second-type access-network network element supports the emergency service. When the terminal is moved to any type of access-network network element, the terminal may initiate the emergency service based on the first indication information. Still further, the core-network network element in the first network may send the second indication information to indicate whether the core network supports the emergency service in the tracking area list in which the terminal is currently located. In this way, when the terminal is randomly moved in the tracking area list, the terminal may learn of whether the core-network network element in the first network supports the emergency service, so that the terminal can effectively initiate the emergency service.

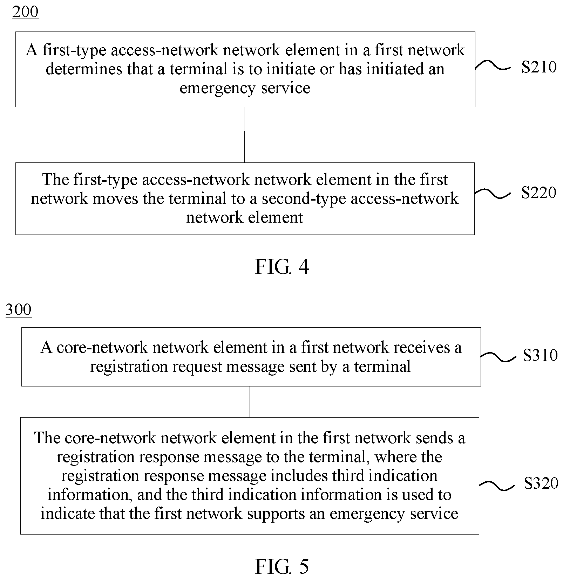

FIG. 4 shows a service processing method 200 according to an embodiment of this application. The method 200 includes the following steps.

S210. A first-type access-network network element in a first network determines that a terminal is to initiate or has initiated an emergency service.

Optionally, before S210, the method further includes: sending, by the first-type access-network network element in the first network, third indication information to the terminal; and receiving, by the terminal, the third indication information from the first-type access-network network element in the first network, where the third indication information is used to indicate that the first network supports the emergency service. If the terminal device determines, when receiving the third indication information, that the first network supports the emergency service, the terminal may send the emergency service to the first-type access-network network element in the first network. Optionally, the first-type access-network network element in the first network sends a broadcast message to the terminal, where the broadcast message includes third indication information, and the emergency service is initiated by the terminal based on the third indication information.

It should be understood that, that the first network supports the emergency service includes that a core-network network element in the first network supports the emergency service and an access-network network element in the first network supports the emergency service.

Optionally, before the first-type access-network network element in the first network sends the third indication information to the terminal, or before the first-type access-network network element in the first network sends the broadcast message to the terminal, the method 200 further includes: determining, by the first-type access-network network element in the first network, that the terminal that is to initiate or has initiated the emergency service can be moved by the first network to a second-type access-network network element. Optionally, that the terminal that is to initiate or has initiated the emergency service can be moved by the first network to a second-type access-network network element may be that the terminal that is to initiate or has initiated the emergency service can be fallen back by the first network to the second-type access-network network element.

Specifically, that the first-type access-network network element in the first network determines that the terminal that is to initiate or has initiated the emergency service can be moved by the first network to a second-type access-network network element may be as follows: When detecting that the terminal is to initiate or has initiated the emergency service, for example, initiates an emergency voice service, the first-type access-network network element in the first network can hand over the terminal from the first-type access-network network element in the first network to the second-type access-network network element. Optionally, the terminal may be handed over to a second-type access-network network element in the first network, or may be handed over to a second-type access-network network element in a second network, so that the terminal can continue to execute the emergency service in the second-type access-network network element. Optionally, the core-network network element in the first network sends fourth indication information to the first-type access-network network element in the first network, and the first-type access-network network element in the first network receives the fourth indication information from the core-network network element in the first network, where the fourth indication information is used to indicate that the terminal has initiated or is to initiate the emergency service; and S210 includes: determining, by the first-type access-network network element in the first network based on the fourth indication information, that the terminal is to initiate or has initiated the emergency service.

Optionally, the core-network network element in the first network sends a first cause to the first-type access-network network element in the first network, where the first cause is used to indicate that a to-be-established tunnel is established due to the emergency service; and S210 includes: determining, by the first-type access-network network element in the first network based on the first cause, that the terminal is to initiate or has initiated the emergency service.

S220. The first-type access-network network element in the first network triggers a procedure of moving the terminal to a second-type access-network network element. For example, it is assumed by default that the first-type access-network network element in the first network does not support the emergency service and the second-type access-network network element supports the emergency service. In this case, the first-type access-network network element in the first network may move the terminal to the second-type access-network network element, for example, may move the terminal to a second-type access-network network element in the first network, or may move the terminal to a second-type access-network network element in a second network.

Optionally, before S220, the method further includes: determining, by the first-type access-network network element in the first network, that the first network does not support the emergency service. Optionally, the determining, by the first-type access-network network element in the first network, that the first network does not support the emergency service includes: determining, by the first-type access-network network element in the first network, that the first-type access-network network element in the first network does not support the emergency service; or determining, by the first-type access-network network element in the first network, that the core-network network element in the first network does not support the emergency service; or determining, by the first-type access-network network element in the first network, that the first-type access-network network element in the first network does not support the emergency service and the core-network network element in the first network does not support the emergency service.

Optionally, the method further includes: sending, by the core-network network element in the first network, fifth indication information to the first-type access-network network element in the first network, where the fifth indication information is used to indicate whether the core-network network element in the first network supports the emergency service; and S220 includes: if the fifth indication information is used to indicate that the core-network network element in the first network supports the emergency service, moving, by the first-type access-network network element in the first network, the terminal to the second-type access-network network element in the first network; or if the fifth indication information is used to indicate that the core-network network element in the first network does not support the emergency service, moving, by the first-type access-network network element in the first network, the terminal to the second-type access-network network element in the second network.

Optionally, the fifth indication information is used to indicate whether the core-network network element in the first network supports the emergency service in a tracking area list in which the terminal is currently located. To be specific, when the core-network network element in the first network supports the emergency service in a tracking area in which the terminal is currently located, the first-type access-network network element in the first network moves the terminal to the second-type access-network network element in the first network; or when the core-network network element in the first network does not support the emergency service in a tracking area in which the terminal is currently located, the first-type access-network network element in the first network moves the terminal to the second-type access-network network element in the second network.

In this embodiment of this application, the first-type access-network network element is a fifth-generation radio access network 5G RAN network element, and the second type access-network network element is an EUTRAN type.

Therefore, in this embodiment of this application, when the first-type access-network network element in the first network determines that the terminal is to initiate or has initiated the emergency service, the first-type access-network network element in the first network moves the terminal to the second-type access-network network element. In this way, for example, when the first-type access-network network element in the first network does not support the emergency service by default and the second-type access-network network element supports the emergency service by default, the first-type access-network network element in the first network may move the terminal to the second-type access-network network element that supports the emergency service by default, so that the terminal can effectively initiate the emergency service. Alternatively, when the first-type access-network network element in the first network determines that the first network does not support the emergency service (the core-network network element in the first network does not support the emergency service and/or the first-type access-network network element in the first network does not support the emergency service), the first-type access-network network element moves the terminal to the second-type access-network network element. Further, the first-type access-network network element in the first network may send the third indication information to the terminal, where the third indication information indicates that the first network supports the emergency service (the core-network network element in the first network supports the emergency service and the first-type access-network network element in the first network supports the emergency service), so that the terminal can initiate the emergency service to the first-type access-network network element in the first network based on the third indication information. When determining that the first network does not support the emergency service, the first-type access-network network element in the first network may move the terminal to the second-type access-network network element. In this way, the terminal may not perceive a change of an access-network network element, and this can also ensure that the terminal can accurately initiate the emergency service.

FIG. 5 shows a service processing method 300 according to an embodiment of this application. The method 300 includes the following steps.

S310. A core-network network element in a first network receives a registration request message from a terminal, where the registration request message is used to request to register with the core-network network element in the first network.

Before S310, the method further includes: determining, by the core-network network element in the first network, that a terminal that is to initiate or has initiated an emergency service can be moved by the first network to a second-type access-network network element. Optionally, the second-type access-network network element may be an access-network network element in the first network or an access-network network element in a second network. This is not limited in this embodiment of this application.

It should be understood that, that a terminal that is to initiate or has initiated an emergency service can be moved by the first network to a second-type access-network network element may be as follows: The terminal that is to initiate or has initiated the emergency service can be moved by a first-type access-network network element in the first network to the second-type access-network network element; or the terminal that is to initiate or has initiated the emergency service can be moved by the core-network network element in the first network to the second-type access-network network element; or the terminal that is to initiate or has initiated the emergency service can be moved by a first-type access-network network element in the first network and the core-network network element in the first network to the second-type access-network network element. Specifically, when the first network detects that the terminal is to initiate or has initiated the emergency service, for example, detects that the terminal initiates an emergency voice service, the terminal can be handed over or redirected by the core-network network element in the first network and/or the first-type access-network network element in the first network from the first-type access-network network element in the first network to the second-type access-network network element. Optionally, the terminal may be handed over or redirected to a second-type access-network network element in the first network, or may be handed over or redirected to a second-type access-network network element in the second network, so that the terminal can continue to execute the emergency service in the second-type access-network network element.

S320. The core-network network element in the first network sends a registration response message to the terminal, where the registration response message always includes the third indication information, and the third indication information is used to indicate that the first network supports an emergency service. In this way, the terminal may obtain the third indication information from the registration response message, and if the terminal determines, based on the third indication information, that the first network supports the emergency service, the terminal may initiate the emergency service in the first network.

It should be understood that, that the registration response message always includes the third indication information may be that the registration response message always includes the third indication information regardless of whether the first network supports the emergency service. In other words, when the first network supports the emergency service, the core-network network element in the first network sends the registration response message to the terminal, where the third indication information included in the registration response message is used to indicate that the first network supports the emergency service; or when the first network does not support the emergency service, the core-network network element in the first network sends the registration response message to the terminal, where the third indication information included in the registration response message is used to indicate that the first network supports the emergency service.

Optionally, after S320, the method 300 further includes: determining, by the core-network network element in the first network, that the terminal is to initiate or has initiated the emergency service, where the emergency service is to be initiated or has been initiated by the terminal based on the third indication information; and sending, by the core-network network element in the first network, fourth indication information to the first-type access-network network element that is in the first network and in which the terminal is currently located, and receiving, by the first-type access-network network element in the first network, the fourth indication information, where the fourth indication information is used to indicate that the terminal is to initiate or has initiated the emergency service, so that the first-type access-network network element in the first network moves the terminal to the second-type access-network network element.

The core-network network element in the first network may determine, in the following two manners, that the terminal is to initiate or has initiated the emergency service.

In a first manner, the core-network network element in the first network receives a session setup request message from the terminal, where the session setup request message is used to request to set up a session for the emergency service; and the core-network network element in the first network determines, based on the session setup request message, that the terminal is to initiate or has initiated the emergency service. In this manner, when determining that the terminal is to initiate or has initiated the emergency service, the core-network network element in the first network may indicate, to the first-type access-network network element in the first network by using the fourth indication information, that the terminal is to initiate or has initiated the emergency service, that is, the first-type access-network network element in the first network may move the terminal to the second-type access-network network element in a process of setting up the session for the emergency service. For example, the first-type access-network network element in the first network may send a handover request message to the core-network network element in the first network to trigger movement of the terminal to the second-type access-network network element. Alternatively, the first-type access-network network element in the first network sends redirection information to the terminal to move the terminal to the second-type access-network network element, for example, the redirection information may carry frequency information, cell information, and the like of the second-type access-network network element, so that the terminal can be moved to the second-type access-network network element based on the frequency information, the cell information, and the like.

In a second manner, the core-network network element in the first network receives a first message from a session management network element in the first network, where the first message is used to establish a user plane tunnel for the emergency service; and the core-network network element in the first network determines, based on the first message, that the terminal is to initiate or has initiated the emergency service. In this manner, when determining that the terminal is to initiate or has initiated the emergency service, the core-network network element in the first network may indicate, to the first-type access-network network element in the first network by using the fourth indication information, that the terminal is to initiate or has initiated the emergency service, that is, the first-type access-network network element in the first network may move the terminal to the second-type access-network network element in a process of establishing the user plane tunnel for the emergency service. For example, the first-type access-network network element in the first network may send a handover request message to the core-network network element in the first network to trigger movement of the terminal to the second-type access-network network element.

In this embodiment of this application, the first-type access-network network element is a 5G RAN network element, and the second type is an EUTRAN type.

Therefore, in this embodiment of this application, the core-network network element in the first network may send the third indication information to the terminal to indicate that the first network supports the emergency service. In this way, when determining that the terminal is to initiate or has initiated the emergency service based on the third indication information, the core network may notify the first-type access-network network element in the first network of the event by using the fourth indication information. Therefore, the first-type access-network network element in the first network can move the terminal to the second-type access-network network element, to help the terminal initiate the emergency service.

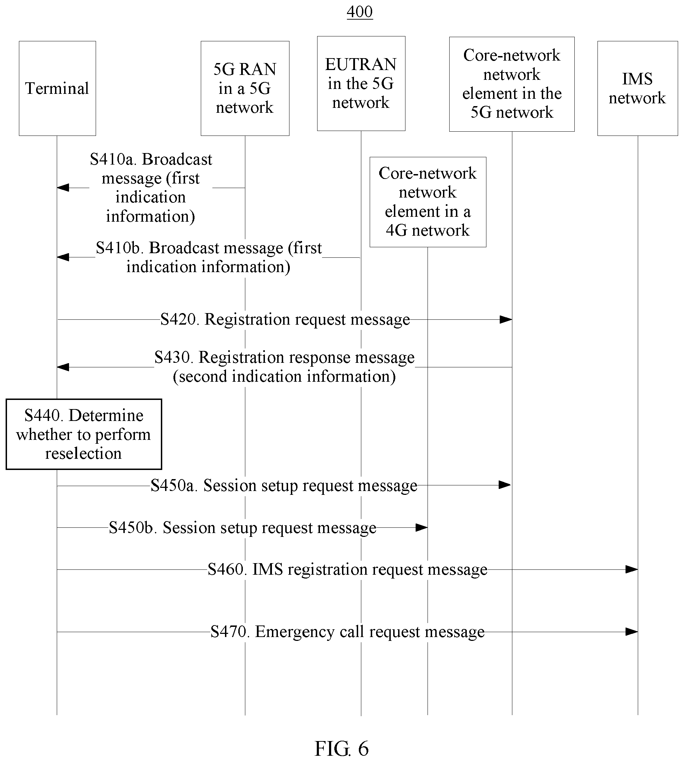

The following describes in detail the service processing method in the embodiments of this application with reference to FIG. 6 to FIG. 11. The following provides description by using an example in which a first network is a 5G network and a second network is a 4G network.

FIG. 6 shows another service processing method 400 according to an embodiment of this application. The method 400 includes the following steps.

S410. An access-network network element in a 5G network sends a broadcast message to a terminal, and the terminal receives the broadcast message from the access-network network element in the 5G network. For example, the broadcast message may be a system message, and the broadcast message carries first indication information that indicates whether the access-network network element in the 5G network supports an emergency service.

For example, access-network network elements in the 5G network include a 5G RAN and an EUTRAN. In this case, S410 specifically includes S410a and SlOb. In S410a, the 5G RAN sends a broadcast message, where the broadcast message carries first indication information, and the first indication information is used to indicate whether the 5G RAN supports the emergency service. In S410b, the EUTRAN broadcasts first indication information, where the first indication information is used to indicate whether the EUTRAN supports the emergency service. Specifically, when the terminal is moved to any type of access-network network element, the terminal may obtain a broadcast message from the access-network network element, to determine whether an access-network network element in which the terminal is currently located supports the emergency service.

Optionally, the access-network network element in the 5G network may further indicate, by using the broadcast message, that an IMS emergency call is supported. That the IMS emergency call is supported may be that the service is supported by the 5G network and an IMS network in an end-to-end manner. After learning of that the IMS emergency call is supported, the terminal may choose to initiate and execute the emergency service in an IMS domain, for example, initiate an emergency call.

S420. When choosing to access a cell in the 5G network, the terminal sends a registration request (registration request) message to a core-network network element in the 5G network, to request to register with the 5G network.

It should be understood that in this embodiment of this application, a sequence of S410 and S420 is not limited. S410 may be performed before or after S420, or S410 and S420 may be performed at the same time.

S430. After the terminal successfully performs registration, the core-network network element in the 5G network sends a registration response message to the terminal. The registration response message may also be referred to as a registration accept (registration accept) message. The registration response message carries second indication information. The second indication information indicates whether the core-network network element in the 5G network supports the emergency service.

Optionally, the core-network network element in the 5G network may support the emergency service on a TA list basis, that is, supports the emergency service for some TA lists, and does not support the emergency service for some TA lists. Further, the second indication information may be specifically used to indicate whether the core-network network element in the 5G network supports the emergency service in a TA list in which the terminal is currently located.

Optionally, the core-network network element in the 5G network may further indicate, by using the registration response message, that an IMS emergency call is supported. That the IMS emergency call is supported may be that the service is supported by the 5G network and an IMS network in an end-to-end manner. After learning of that the IMS emergency call is supported, the terminal may choose to initiate and execute the emergency service in an IMS domain, for example, initiate an emergency call.

S440. If the terminal is in a cell covered by the 5G RAN, when the terminal needs to initiate the emergency service and the terminal is in an idle mode, the terminal determines, based on the first indication information and the second indication information, whether cell reselection or network reselection needs to be performed. It should be understood that, cell reselection may mean that the terminal needs to reselect from the current cell covered by the 5G RAN to a cell covered by the EUTRAN in the 5G network, and network reselection may mean that the terminal needs to reselect from the current 5G network to a 4G network, for example, reselect to a cell covered by an EUTRAN in the 4G network.

S450a. If the first indication information indicates that the 5G RAN supports the emergency service and the second indication information indicates that the core-network network element in the 5G network supports the emergency service, the terminal determines that reselection does not need to be performed, is still in a range of the cell covered by the 5G RAN, and sends a session setup request message to the core-network network element in 5G network, to request to set up a session related to the emergency service.

Further, if the first indication information indicates that the 5G RAN does not support the emergency service and the second indication information indicates that the core-network network element in the 5G network supports the emergency service, the terminal determines that cell reselection or network reselection needs to be performed. For example, during cell reselection, the terminal may reselect to an EUTRAN cell in the 5G network. To be specific, in this case, it may be understood that the EUTRAN cell in the 5G network supports the emergency service by default, and the terminal still sends a session setup request message to the core-network network element in 5G, to request to set up a session related to the emergency service. Certainly, the terminal may alternatively perform network reselection, and may reselect to an EUTRAN cell in the 4G network. In this case, the terminal sends a session setup request message to a core-network network element in 4G network, to request to set up a session related to the emergency service.

For example, in S450a, if the terminal sends a session setup request to the core-network network element in the 5G network, the session setup request message may be a packet data unit session setup request (packet data unit session setup request), and may carry emergency indication (emergency indication) information. The emergency indication information is used by the core-network network element in the 5G network to trigger a procedure of setting up a session related to the emergency service. The core-network network element in the 5G network sets up, based on the emergency indication information, the session related to the emergency service, for example, sets up a related session between the terminal and the IMS network. If the terminal sends a session setup request to the core-network network element in the 4G network, the session setup request message may be a packet data network connectivity setup request (packet data network connectivity setup request) message. Optionally, the packet data network connectivity setup request message may carry emergency indication information. The emergency indication information is used by the core-network network element in the 4G network to trigger a procedure of setting up a session related to the emergency service. The core-network network element in the 4G network sets up, based on the emergency indication information, the session related to the emergency service, for example, sets up a related session between the terminal and the IMS network.

S450b. If the first indication information indicates that the 5G RAN does not support the emergency service and the second indication information indicates that the core-network network element in the 5G network does not support the emergency service, the terminal determines that network reselection needs to be performed, and may reselect to the cell in a coverage area of the EUTRAN in the 4G network. In this case, the terminal sends a session setup request message to a core-network network element in the 4G network, to request to set up a session related to the emergency service. For example, the session request message may be a packet data network connectivity setup request (packet data network connectivity setup request) message. Optionally, the packet data network connectivity setup request message may carry emergency indication information. The emergency indication information is used by the core-network network element in the 4G network to trigger a procedure of setting up the session related to the emergency service. The core-network network element in the 4G network sets up, based on the emergency indication information, the session related to the emergency service, for example, sets up a related session between the terminal and the IMS network.

It should be understood that either S450a or S450b exists.

S460. The terminal initiates an IMS registration request message to the IMS network, where the IMS registration request message carries emergency indication information, and the emergency indication information is used to request to perform emergency registration with the IMS network. Optionally, the terminal may initiate the IMS registration request message to the IMS network by using a related-session setup procedure in S450.

S470. The terminal initiates an emergency call request message to the IMS network, to request to establish an IMS emergency call service, where the emergency call request message carries emergency indication information, and the emergency indication information is used to indicate that an IMS call that the terminal requests to establish is due to the emergency service.

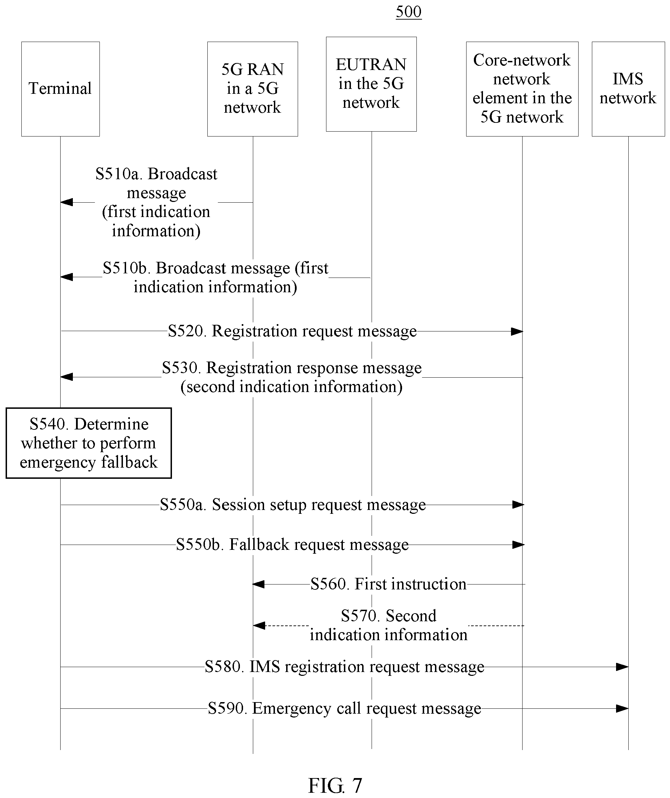

FIG. 7 shows another service processing method 500 according to an embodiment of this application. A difference between the method 400 and the method 500 lies in that a terminal in the method 400 is in an idle mode and a terminal in the method 500 is in a data connected mode. The method 500 includes the following steps.

S510. Same as S410, where S510 includes S510a and S510b, S510a is the same as S410a, and S510b is the same as S410b.

S520. Same as S420.

S530. Same as S430.

S540. If the terminal is in a cell covered by the 5G RAN, when the terminal needs to initiate the emergency service and the terminal is in the data connected mode, the terminal determines, based on the first indication information and the second indication information, whether emergency fallback needs to be performed.

S550a. If the first indication information indicates that the 5G RAN supports the emergency service and the second indication information indicates that the core-network network element in the 5G network supports the emergency service, the terminal determines that emergency fallback does not need to be performed, is still in a range of the cell covered by the 5G RAN, sends a session setup request message to the core-network network element in 5G, to request to set up a session related to the emergency service, and performs the following S580 and S590.

For example, in S550a, the session setup request message may be a packet data unit session setup request, and may carry emergency indication information. The emergency indication information is used to trigger a procedure in which the core-network network element in the 5G network sets up the session related to the emergency service. The core-network network element in the 5G network sets up, based on the emergency indication information, the session related to the emergency service, for example, sets up a related session between the terminal and the IMS network.

S550b. If the first indication information indicates that the 5G RAN does not support the emergency service and/or the second indication information indicates that the core-network network element in the 5G network does not support the emergency service, that is, provided that one of the 5G RAN and the core-network network element in the 5G network does not support the emergency service, the terminal device determine that emergency fallback needs to be performed, and the terminal sends a fallback request message to the core-network network element in the 5G network, where the fallback request message is used to request to execute a fallback procedure for the emergency service.

S560. The core-network network element in the 5G network receives the fallback request message from the terminal, and sends a first instruction to the 5G RAN in the 5G network based on the fallback request message, where the first instruction is used to instruct the 5G RAN in the 5G network to fall back the terminal to an EUTRAN. The 5G RAN receives the first instruction from the core-network network element in the 5G network, and falls back the terminal to the EUTRAN based on the first instruction. For example, the EUTRAN may be an EUTRAN in the 5G network or an EUTRAN in a 4G network.

Optionally, the 5G RAN may fall back the terminal to the EUTRAN in two manners. In a first manner, the 5G RAN sends redirection information to the terminal, where the redirection information carries frequency information, cell information, and the like of the EUTRAN; and the 5G RAN may add the redirection information into a radio resource control connection release (radio resource control connection release) message. In a second manner, the 5G RAN may hand over the terminal to the EUTRAN through handover. For example, the 5G RAN may initiate, to the core-network network element in the 5G network, a handover procedure of handing over the terminal to the EUTRAN. A specific handover procedure is not described herein in detail.

Optionally, the method 500 further includes S570, where the core-network network element in the 5G network may send second indication information to the 5G RAN, and the 5G RAN may determine, based on the second indication information, an EUTRAN that is in a network and to which the terminal is fallen back. For example, if the second indication information indicates that the core-network network element in the 5G network supports the emergency service, the access-network network element in the 5G network preferably moves the terminal to the EUTRAN in the 5G network. If the second indication information indicates that the core-network network element in the 5G network does not support the emergency service, the access-network network element in the 5G network moves the terminal to the EUTRAN network.

S580. Same as S460.

S590. Same as S470.

It should be understood that in the method 500, when the terminal determines that emergency fallback does not need to be performed, step S550a is performed, and S580 and S590 are performed after S550a; or when the terminal determines that emergency fallback needs to be performed, step S550b is performed, and after S550b, S560 is performed or S560 and S570 are performed.

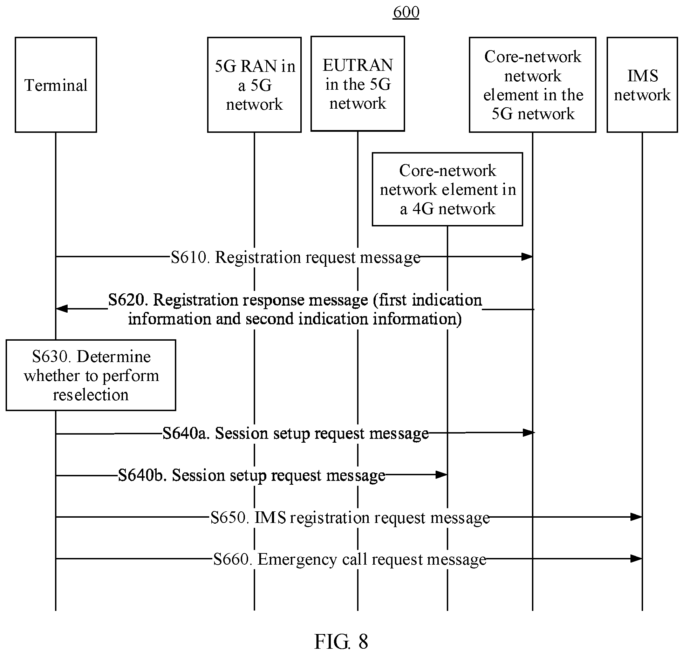

FIG. 8 shows another service processing method 600 according to an embodiment of this application. A difference between the method 400 and the method 600 lies in that manners of sending first indication information and second indication information in the method 400 and the method 600 are different. The method 600 includes the following steps.

S610. When choosing to access a cell in a 5G network, a terminal sends a registration request message to a core-network network element in the 5G network, to request to register with the 5G network.

For example, access-network network elements in the 5G network include two types of access-network network elements: a 5G RAN and an EUTRAN.

S620. After the terminal successfully performs registration, the core-network network element in the 5G network sends a registration response message to the terminal. The registration response message may also be referred to as a registration accept message. The registration response message carries first indication information and second indication information. The first indication information is used to indicate whether the 5G RAN supports an emergency service and whether the EUTRAN supports the emergency service. The second indication information indicates whether the core-network network element in the 5G network supports the emergency service. Optionally, the core-network network element in the 5G network may support the emergency service on a TA list basis, that is, supports the emergency service for some TA lists, and does not support the emergency service for some TA lists. Further, the second indication information may be specifically used to indicate whether the core-network network element in the 5G network supports the emergency service in a TA list in which the terminal is currently located.

Optionally, the core-network network element in the 5G network may further indicate, by using the registration response message, that an IMS emergency call is supported. That the IMS emergency call is supported may be that the service is supported by the 5G network and an IMS network in an end-to-end manner. After learning of that the IMS emergency call is supported, the terminal may choose to initiate and execute the emergency service in an IMS domain, for example, initiate an emergency call.

S630. Same as S440.

S640a. Same as S450a.

S640b. Same as S450b.

It should be understood that either S640a or S640b exists.

S650. Same as S460.

S660. Same as S470.

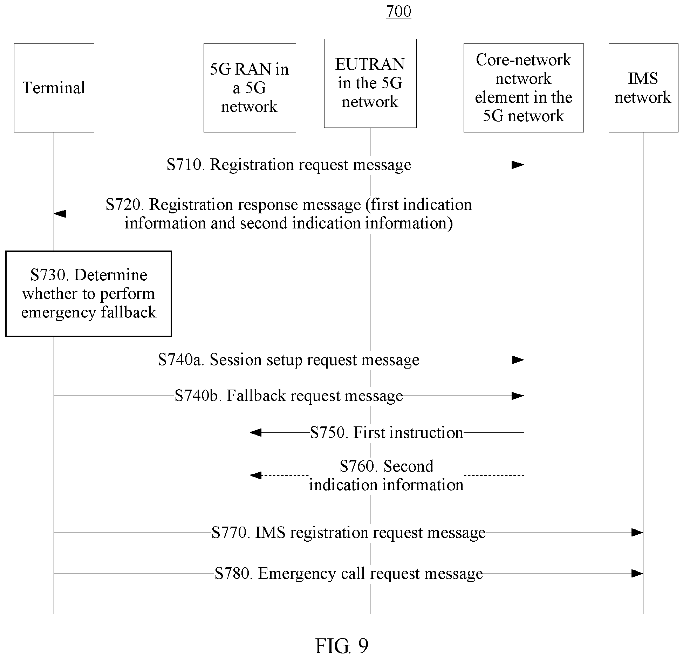

FIG. 9 shows another service processing method 700 according to an embodiment of this application. A difference between the method 600 and the method 700 lies in that a terminal in the method 600 is in an idle mode and a terminal in the method 700 is in a data connected mode. The method 700 includes the following steps.

S710. Same as S610.

S720. Same as S620.

S730. Same as S540.

S740a. Same as S550a.

S740b. Same as S550b.

S750. Same as S560.

Optionally, the method 700 further includes S760, and S760 is the same as S570.

S770. Same as S580.

S780. Same as S590.

It should be understood that in the method 700, when the terminal determines that emergency fallback does not need to be performed, step S740a is performed, and S770 and S780 are performed after S740a; or when the terminal determines that emergency fallback needs to be performed, step S740b is performed, and after S740b, S750 is performed or S750 and S760 are performed.

It should be understood that, for ease of description, in the method 400 to the method 700, the core-network network element in the 5G network is connected to both the 5G RAN and the EUTRAN. In an actual application process, the core-network network element the 5G network may be connected only to the 5G RAN, and is not connected to the EUTRAN. This is not limited in the embodiments of this application.

It should also be understood that in the method 400 to the method 700, that the terminal is currently within a coverage area of the 5G RAN is only used as an example for description. When the terminal is currently within a coverage area of the EUTRAN, a method is similar to the method 400 to the method 700. To avoid repetition, details are not described in the embodiments of this application.

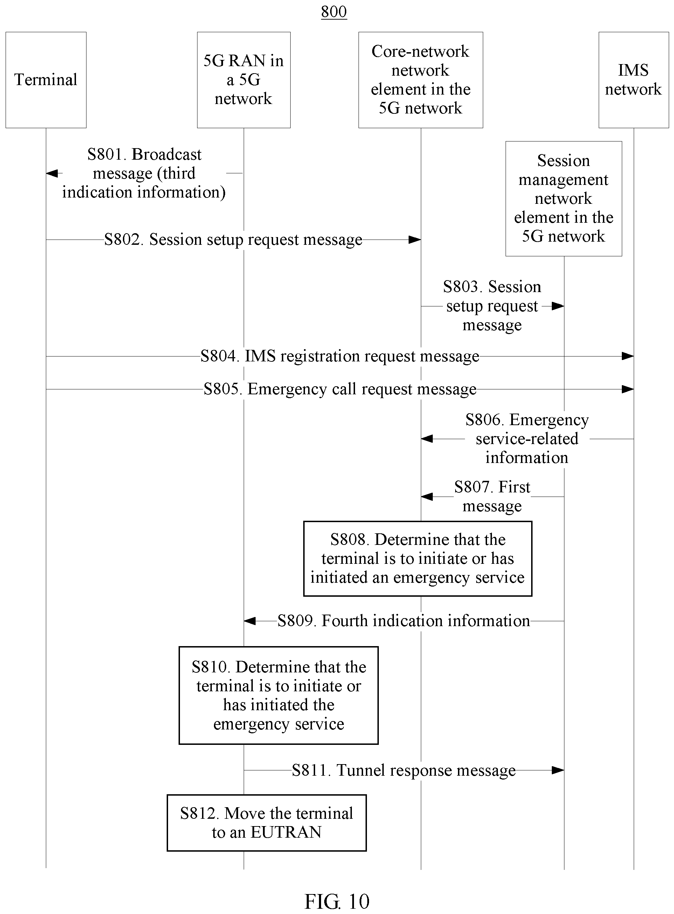

FIG. 10 shows another service processing method 800 according to an embodiment of this application. The method 800 includes the following steps.

S801. If a terminal that is to initiate or has initiated an emergency service can be moved by a 5G network to an EUTRAN, a 5G RAN may send a broadcast message to the terminal, where the broadcast message carries third indication information, and the third indication information is used to indicate that the 5G network supports the emergency service. That the 5G network supports the emergency service may be that a core-network network element in the 5G network and the 5G RAN in the 5G network support the emergency service. Herein, a 5G EUTRAN may also support the emergency service by default.

Optionally, the 5G RAN may further indicate, by using the broadcast message, that an IMS emergency call is supported. That the IMS emergency call is supported may be that the service is supported by the 5G network and an IMS network in an end-to-end manner. After learning of that the IMS emergency call is supported, the terminal may choose to initiate and execute the emergency service in an IMS domain, for example, initiate an emergency call.

S802. The terminal receives the broadcast message from the 5G RAN, and obtains the third indication information from the broadcast message. The terminal may determine, based on the third indication information, that the 5G network supports the emergency service. The terminal may send a session setup request message to the core-network network element in the 5G network. The session setup request message may be a packet data unit session setup request, and may carry emergency indication information. The emergency indication information is used to trigger a procedure in which the core-network network element in the 5G network sets up a session related to the emergency service. The core-network network element in the 5G network sets up, based on the emergency indication information, the session related to the emergency service, for example, sets up a related session between the terminal and an IMS network.

It should be understood that, S802 may be performed when the terminal needs to initiate the emergency service, or S802 may be performed before the terminal initiates the emergency service. This is not limited in this embodiment of this application.

S803. The core-network network element (for example, may be an AMF) in the 5G network receives the session setup request message from the terminal, and the core-network network element in the 5G network sends the session setup request message to a session management network element (for example, may be an SMF network element) in the 5G network, where the session setup request message carries the emergency indication information. For example, the core-network network element in the 5G network may send the session setup request message to the session management network element in the 5G network by using a point-to-point interface message, to request to set up a packet data unit session, and the session management network element sets up the session related to the emergency service. Alternatively, the core-network network element in the 5G network may request, by using a service interface, the session management network element in the 5G network to invoke a session context establishment service, so as to request the session management network element to establish a session context related to the emergency service.

Optionally, if the session management network element is an SMF network element, the SMF network element may send the session setup request message to a PCF network element, and the PCF network element may formulate a corresponding policy.

S804. The terminal initiates an IMS registration request message to the IMS network, where the IMS registration request message carries emergency indication information, and the emergency indication information is used to request to perform emergency registration with the IMS network.

Optionally, S804 includes: initiating, by the terminal, the IMS registration request message to the IMS network by using the session that is set up in S803, or initiating the IMS registration request message to the IMS network by using a session that is set up by a common packet data unit.

S805. The terminal initiates an emergency call request message to the IMS network.

S806. When receiving the emergency call request message, the IMS network sends emergency service-related information to the core-network network element (for example, may be a PCF) in the 5G network, where the emergency service-related information is used to trigger the 5G network to establish a user plane tunnel for the emergency service, and the 5G network establishes the user plane tunnel based on the emergency service-related information.

Specifically, the core-network network element in the 5G network and the 5G RAN establish a corresponding quality of service (quality of service, Qos) flow for the emergency service.

S807. The core-network network element (for example, may be an AMF) in the 5G network receives a first message from the session management network element in the 5G network, where the first message is used to establish the user plane tunnel for the emergency service. For example, the first message may be a packet data unit (packet data unit, PDU) session modification request, and the PDU session modification request is used to request to establish the user plane tunnel for the emergency service.

Specifically, the first message may carry session management information, where the session management information includes an emergency indication and/or QoS information related to the emergency service, and the core-network network element in 5G forwards the session management information to the 5G RAN.

S808. The core-network network element in the 5G network determines, based on the first message, that the terminal is to initiate or has initiated the emergency service.

S809. The core-network network element in the 5G network sends fourth indication information to the 5G RAN in which the terminal is currently located, where the fourth indication information is used to indicate that the terminal is to initiate or has initiated the emergency service.

S810. The 5G RAN receives the fourth indication information from the core-network network element in the 5G network, and the 5G RAN determines, based on the fourth indication information, that the terminal is to initiate or has initiated the emergency service.

Optionally, the 5G RAN may further determine, based on the emergency indication and/or the QoS information related to the emergency service that are/is included in the session management information forwarded by the core-network network element in the 5G network, that the terminal is to initiate or has initiated the emergency service.

Optionally, S807 to S810 may be replaced with the following procedure: The 5G RAN receives an N2 interface message from the core-network network element in the 5G network, where the N2 interface message carries cause information, and the cause information is used to indicate that a to-be-established user plane tunnel is established due to the emergency service. The 5G RAN may determine, based on the cause information, that the terminal is to initiate or has initiated the emergency service, and the core-network network element in the 5G network does not need to send fourth indication information to the 5G RAN to indicate that the terminal is to initiate or has initiated the emergency service.

S811. The 5G RAN sends a tunnel establishment response message to the session management network element in the 5G network by using the core-network network element in the 5G network, where the tunnel establishment response message may include indication information indicating whether tunnel establishment succeeds. If tunnel establishment succeeds, the tunnel of the emergency service is established in the 5G RAN. In this case, the 5G RAN may switch the established tunnel to the EUTRAN. If tunnel establishment fails, the tunnel of the emergency service needs to be re-established in the EUTRAN after handover.

S812. If the 5G RAN does not support the emergency service or the core-network network element in 5G does not support the emergency service, the 5G RAN moves the terminal to the EUTRAN, for example, hands over the terminal to the EUTRAN. For example, the EUTRAN may be the EUTRAN in the 5G network or an EUTRAN in a 4G network.

Optionally, a sequence of S811 and S812 is not limited in this embodiment of this application.

Optionally, the 5G RAN receives fifth indication information from the core-network network element in the 5G network, where the fifth indication information is used to indicate whether the core-network network element in the 5G network supports the emergency service. If the fifth indication information is used to indicate that the core-network network element in the 5G network supports the emergency service, the 5G RAN preferably moves the terminal to the EUTRAN in the 5G network. If the fifth indication information is used to indicate that the core-network network element in the 5G network does not support the emergency service, the 5G RAN moves the terminal to the EUTRAN in the 4G network. Further, the fifth indication information may be specifically used to indicate whether the core-network network element in the 5G network supports the emergency service in a TA list, or may be used to indicate whether the core-network network element in the 5G network supports the emergency service in a current TA, or may be used to indicate whether the core-network network element in the 5G network supports the emergency service in a current cell. This is not limited in this embodiment of this application.

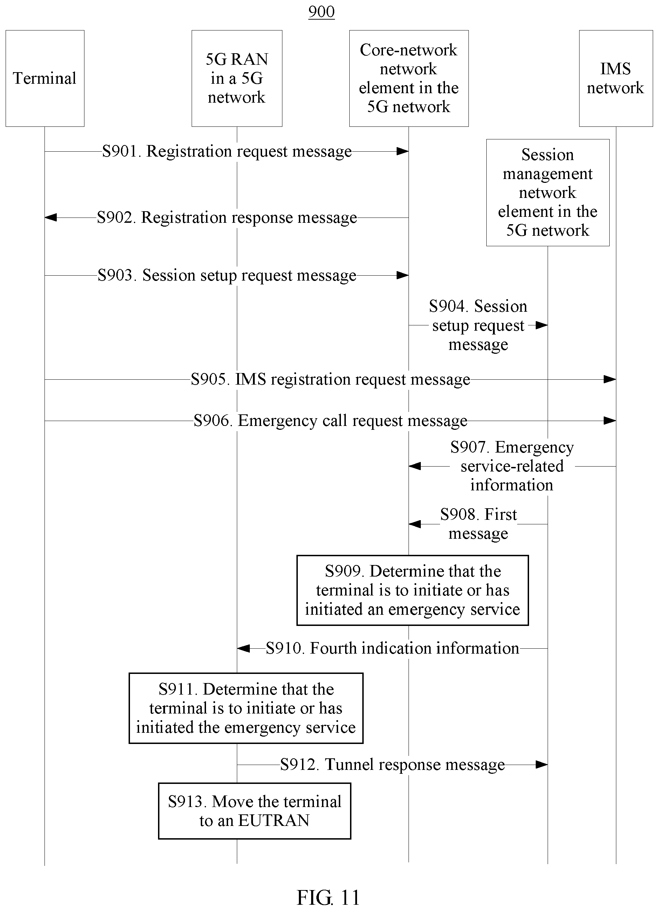

FIG. 11 shows another service processing method 900 according to an embodiment of this application. A difference between the method 800 and the method 900 lies in that manners of sending third indication information are different. The method 900 includes the following steps.

S901. When choosing to access a cell in a coverage area of a 5G RAN in a 5G network, a terminal sends a registration request message to a core-network network element in the 5G network, to request to register with the 5G network.

S902. After the terminal successfully performs registration, the core-network network element in the 5G network sends a registration response message to the terminal, where the registration response message carries third indication information, and the third indication information is used to indicate that the 5G network supports an emergency service.

Optionally, the core-network network element in the 5G network may further indicate, by using the registration response message, that an IMS emergency call is supported. That the IMS emergency call is supported may be that the service is supported by the 5G network and an IMS network in an end-to-end manner. After learning of that the IMS emergency call is supported, the terminal may choose to initiate and execute the emergency service in an IMS domain, for example, initiate an emergency call.

S903. The terminal receives the registration response message from the core-network network element in the 5G network, and obtains the third indication information from the registration response message. The terminal may determine, based on the third indication information, that the 5G network supports the emergency service. The terminal may send a session setup request message to the core-network network element in the 5G network. The session setup request message may be a packet data unit session setup request, and may carry emergency indication information. The emergency indication information is used to trigger a procedure in which the core-network network element in the 5G network sets up a session related to the emergency service. The core-network network element in the 5G network sets up, based on the emergency indication information, the session related to the emergency service, for example, sets up a related session between the terminal and an IMS network.

It should be understood that, S901 and S902 may be performed when the terminal needs to initiate the emergency service, or S901 and S902 may be performed before the terminal initiates the emergency service. This is not limited in this embodiment of this application.

S904. Same as S803.

S905. Same as S804.

S906. Same as S805.

S907. Same as S806.

S908. Same as S807.

S909. Same as S808.

S9010. Same as S809.

59011. Same as S810.

S9012. Same as S811.

S9013. Same as S812.

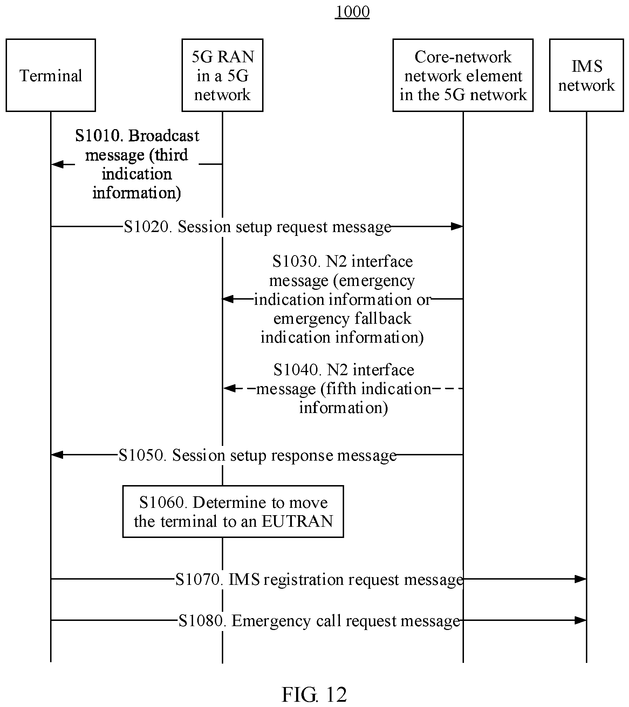

FIG. 12 shows another service processing method 1000 according to an embodiment of this application. A difference between the method 1000 and the method 800 lies in that procedures in which an NG RAN moves a terminal to an EUTRAN are different. In the method 800, the NG RAN moves the terminal to the EUTRAN in a process of establishing a user plane tunnel for an emergency service. In the method 1000, the NG RAN moves the terminal to the EUTRAN in a process of setting up a PDU session for the emergency service. The method 1000 includes the following steps.

S1010. Same as S801.

S1020. Same as S802.

S1030. When receiving the session setup request from the terminal, the core-network network element in the 5G network determines, based on the emergency indication information included in the session setup request, that the session is set up due to the emergency service. Specifically, the session setup request may be a PDU session request. The core-network network element in the 5G network sends an N2 interface message to the 5G RAN, where the N2 interface message carries emergency indication information or emergency fallback indication information (for example, may be the foregoing fourth indication information). The emergency indication information is used to notify the 5G RAN that the terminal initiates the emergency service. The emergency fallback indication is used to instruct the NG RAN to execute a fallback procedure for the terminal that initiates the emergency service.

Optionally, the method 1000 further includes S1040, where the core-network network element in the 5G network sends fifth indication information to the 5G RAN by using an N2 interface message, and the fifth indication information is used to indicate whether the core-network network element in the 5G network supports the emergency service.

Optionally, when it is determined that the terminal is to be fallen back to the ETRUAN, the method 1000 further includes: S1050, where the core-network network element in the 5G network sends a session setup response message to the terminal, the session setup response message carries cause information, and the cause information indicates that session setup fails because handover is being performed. When the terminal is handed over to the ETRUAN, the session setup request may be initiated to the EUTRAN based on the cause information.

S1060. The 5G RAN receives the N2 interface message from the core-network network element in the 5G network. When the 5G RAN determines that the 5G RAN does not support the emergency service and/or the core-network network element in the 5G network does not support the emergency service, the 5G RAN falls back the terminal to the EUTRAN.

Optionally, in S1040, if the fifth indication information is used to indicate that the core-network network element in the 5G network supports the emergency service, the 5G RAN moves the terminal to the EUTRAN in the 5G network; or if the fifth indication information is used to indicate that the core-network network element in the 5G network does not support the emergency service, the 5G RAN moves the terminal to an EUTRAN in a 4G network.

Optionally, the 5G RAN may fall back the terminal to the EUTRAN in two manners. In a first manner, the 5G RAN sends redirection information to the terminal, where the redirection information carries frequency information, cell information, and the like of the EUTRAN; and the 5G RAN may add the redirection information into a radio resource control connection release message. In a second manner, the 5G RAN may hand over the terminal to the EUTRAN through handover. For example, the 5G RAN may initiate, to the core-network network element in the 5G network, a handover procedure of handing over the terminal to the EUTRAN. A specific handover procedure is not described herein in detail.

S1070. Same as S770.

S1080. Same as S780.

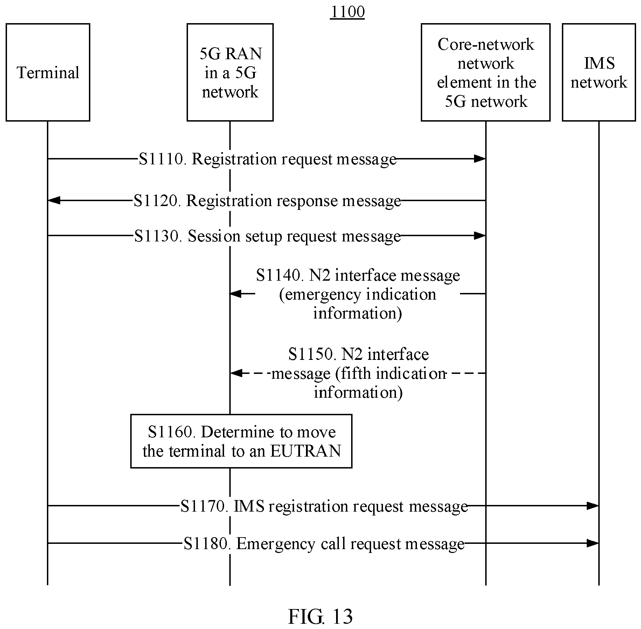

FIG. 13 shows another service processing method 1100 according to an embodiment of this application. A difference between the method 1100 and the method 1000 lies in that manners of sending third indication information are different. The method 1100 includes the following steps.

S1110. Same as S901.

S1120. Same as S902.

S1130. Same as S903.

S1140. Same as S1030.

S1150. Same as S1040.

S1160. Same as S1050.

S1170. Same as S1060.

S1180. Same as S1070.

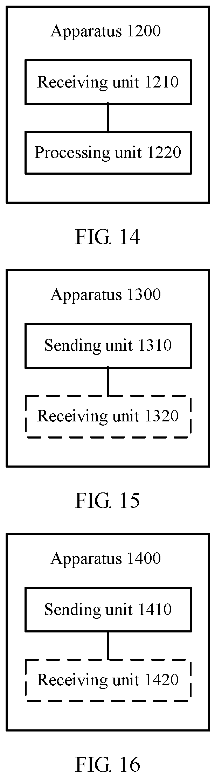

The foregoing describes in detail the service processing method in the embodiments of this application with reference to FIG. 1 to FIG. 13. The following describes in detail a service processing apparatus in the embodiments of this application with reference to FIG. 14 to FIG. 23.

FIG. 14 shows a service processing apparatus 1200 according to an embodiment of this application. The apparatus 1200 includes:
a receiving unit 1210, configured to receive first indication information, where the first indication information is used to indicate whether at least one type of access-network network element in a first network supports an emergency service; and
a processing unit 1220, configured to initiate the emergency service based on the first indication information and/or the second indication information.

In an optional embodiment, the second indication information is specifically used to indicate whether the core-network network element in the first network supports the emergency service in a tracking area list in which the apparatus is currently located.

In an optional embodiment, the receiving unit 1210 is specifically configured to receive a broadcast message from a first-type access-network network element in the first network, where the broadcast message includes the first indication information, and the first indication information is specifically used to indicate whether the first-type access-network network element supports the emergency service.

The receiving unit 1210 is specifically configured to receive a registration response message from the core-network network element, where the registration response message includes the second indication information.

In an optional embodiment, the receiving unit 1210 is specifically configured to receive a registration response message from the core-network network element, where the registration response message includes the first indication information, and the first indication information is specifically used to indicate whether a first-type access-network network element in the first network supports the emergency service and/or whether a second-type access-network network element in the first network supports the emergency service. The receiving unit 1210 is specifically configured to receive the registration response message from the core-network network element, where the registration response message includes the second indication information.

In an optional embodiment, the processing unit 1220 is specifically configured to:
if it is determined, based on the first indication information, that the first-type access-network network element that is in the first network and in which the apparatus is currently located does not support the emergency service, and/or it is determined, based on the second indication information, that the core-network network element in the first network does not support the emergency service, and
if the apparatus is in an idle mode, enable the apparatus to reselect to a second-type access-network network element, and initiate the emergency service by using the second-type access-network network element.

In an optional embodiment, the processing unit 1220 is specifically configured to:
if it is determined, based on the first indication information, that the first-type access-network network element that is in the first network and in which the apparatus is currently located does not support the emergency service, and it is determined, based on the second indication information, that the core-network network element in the first network supports the emergency service, and
if the apparatus is in an idle mode, enable the apparatus to reselect to the second-type access-network network element in the first network, and initiate the emergency service by using the second-type access-network network element in the first network.

In an optional embodiment, the processing unit 1220 is specifically configured to:
if it is determined, based on the first indication information, that the first-type access-network network element that is in the first network and in which the apparatus is currently located does not support the emergency service, and/or it is determined, based on the second indication information, that the core-network network element in the first network does not support the emergency service, and
if the apparatus is in a data connected mode, move the apparatus to a second-type access-network network element; and
initiate the emergency service by using the second-type access-network network element.

In an optional embodiment, the first-type access-network network element is a fifth-generation radio access network 5G RAN network element, and the second-type access-network network element is an evolved universal mobile telecommunications system terrestrial radio access network EUTRAN network element.

In an optional embodiment, the emergency service is an internet protocol multimedia subsystem IMS emergency call service.

It should be understood that the apparatus 1200 herein is embodied in a form of functional units. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described functions. In an optional example, a person skilled in the art may understand that the apparatus 1200 may be specifically the terminal in the foregoing method embodiments, and the apparatus 1200 may be configured to perform procedures and/or steps corresponding to the terminal in the foregoing method embodiments. To avoid repetition, details are not described herein again.

FIG. 15 shows a service processing apparatus 1300 according to an embodiment of this application. The apparatus 1300 includes:
a sending unit 1310, configured to send first indication information to a terminal, where the first indication information is used to indicate whether the apparatus supports an emergency service, so that the terminal initiates the emergency service based on the first indication information.

In an optional embodiment, the sending unit 1310 is specifically configured to send a broadcast message to the terminal, where the broadcast message includes the first indication information.

In an optional embodiment, if the first indication information is used to indicate that the apparatus does not support the emergency service, and/or when a core-network network element in the first network does not support the emergency service, the apparatus further includes: a receiving unit 1320, configured to receive a first instruction from the core-network network element in the first network, where the first instruction is used to instruct the apparatus to trigger a procedure of moving the terminal to a second-type access-network network element; and a triggering unit, configured to trigger, based on the first instruction, the procedure of moving the terminal to the second-type access-network network element.

In an optional embodiment, the receiving unit 1320 is further configured to receive second indication information from the core-network network element in the first network, where the second indication information is used to indicate whether the core-network network element in the first network supports the emergency service. The triggering unit is specifically configured to trigger, based on the first instruction and the second indication information, the procedure of moving the terminal to the second-type access-network network element.

In an optional embodiment, the second indication information is specifically used to indicate whether the core-network network element in the first network supports the emergency service in a tracking area list in which the terminal is currently located.

In an optional embodiment, the triggering unit is specifically configured to: if the second indication information indicates that the core-network network element in the first network supports the emergency service, trigger a procedure of moving the terminal to a second-type access-network network element in the first network; or if the second indication information indicates that the core-network network element in the first network does not support the emergency service, trigger a procedure of moving the terminal to a second-type access-network network element in a second network.

It should be understood that the apparatus 1300 herein is embodied in a form of functional units. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described functions. In an optional example, a person skilled in the art may understand that the apparatus 1300 may be specifically the first-type access-network network element in the first network in the foregoing method embodiments, and the apparatus 1300 may be configured to perform procedures and/or steps corresponding to the first-type access-network network element in the first network in the foregoing method embodiments. To avoid repetition, details are not described herein again.

FIG. 16 shows a service processing apparatus 1400 according to an embodiment of this application. The apparatus 1400 includes:
a sending unit 1410, configured to send second indication information to a terminal, where the second indication information is used to indicate whether the apparatus in the first network supports an emergency service.

In an optional embodiment, the second indication information is specifically used to indicate whether the apparatus supports the emergency service in a tracking area list in which the terminal is currently located.

In an optional embodiment, the sending unit 1410 is specifically configured to send a registration response message to the terminal, where the registration response message includes the second indication information.

In an optional embodiment, the sending unit 1410 is further configured to send first indication information to the terminal, where the first indication information is used to indicate whether at least one type of access-network network element in the first network supports the emergency service.

In an optional embodiment, the first indication information is specifically used to indicate whether a first-type access-network network element in the first network supports the emergency service and/or whether a second-type access-network network element in the first network supports the emergency service.

In an optional embodiment, the sending unit 1410 is further configured to send the registration response message to the terminal, where the registration response message includes the first indication information.

In an optional embodiment, if the first indication information specifically indicates that the first-type access-network network element in the first network does not support the emergency service, or the second indication information is used to indicate that the apparatus does not support the emergency service, the apparatus further includes a receiving unit 1420, configured to receive a fallback request message from the terminal, where the fallback request message is used to request to execute a fallback procedure for the emergency service.

The sending unit 1410 is further configured to send a first instruction to the first-type access-network network element in the first network based on the fallback request message, where the first instruction is used to instruct the first-type access-network network element in the first network to trigger a procedure of moving the terminal to a second-type access-network network element.

In an optional embodiment, the sending unit 1410 is further configured to send the second indication information to the first-type access-network network element in the first network.

It should be understood that the apparatus 1400 herein is embodied in a form of functional units. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described functions. In an optional example, a person skilled in the art may understand that the apparatus 1400 may be specifically the core-network network element in the first network in the foregoing method embodiments, and the apparatus 1400 may be configured to perform procedures and/or steps corresponding to the core-network network element in the first network in the foregoing method embodiments. To avoid repetition, details are not described herein again.

Optionally, an embodiment of this application further provides a service processing system, including the apparatus 1200, the apparatus 1300, and the apparatus 1400.

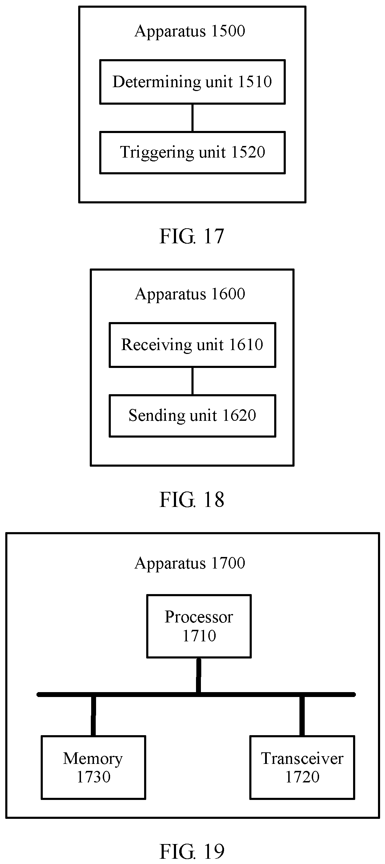

FIG. 17 shows a service processing apparatus 1500 according to an embodiment of this application. The apparatus 1500 includes:
a determining unit 1510, configured to determine that a terminal is to initiate or has initiated an emergency service; and
a triggering unit 1520, configured to trigger a procedure of moving the terminal to a second-type access-network network element.

In an optional embodiment, the determining unit 1510 is further configured to: before the procedure of moving the terminal to the second-type access-network network element is triggered, determine that the first network does not support the emergency service.

In an optional embodiment, the determining unit 1510 is specifically configured to determine that the apparatus does not support the emergency service and/or a core-network network element in the first network does not support the emergency service.

In an optional embodiment, the apparatus further includes a sending unit, configured to send a broadcast message to the terminal, where the broadcast message includes third indication information, and the third indication information is used to indicate that the first network supports the emergency service, so that the terminal initiates the emergency service based on the third indication information.

In an optional embodiment, the determining unit is further configured to: before the broadcast message is sent to the terminal, determine that the terminal that is to initiate or that has initiated the emergency service can be moved by the first network to the second-type access-network network element.

In an optional embodiment, the apparatus further includes a receiving unit, configured to receive fourth indication information from the core-network network element in the first network, where the fourth indication information is used to indicate that the terminal has initiated or is to initiate the emergency service.

The determining unit 1510 is specifically configured to determine, based on the fourth indication information, that the terminal is to initiate or has initiated the emergency service.

In an optional embodiment, the receiving unit is further configured to receive fifth indication information from the core-network network element in the first network, where the fifth indication information is used to indicate whether the core-network network element in the first network supports the emergency service. The triggering unit 1520 is specifically configured to trigger, based on the fifth indication information, the procedure of moving the terminal to the second-type access-network network element.

In an optional embodiment, the triggering unit 1520 is specifically configured to: if the fifth indication information is used to indicate that the core-network network element in the first network supports the emergency service, trigger a procedure of moving the terminal to a second-type access-network network element in the first network; or if the fifth indication information is used to indicate that the core-network network element in the first network does not support the emergency service, trigger a procedure of moving the terminal to a second-type access-network network element in a second network.

In an optional embodiment, the first-type access-network network element is a fifth-generation radio access network 5G RAN network element, and the second-type access-network network element is an evolved universal mobile telecommunications system terrestrial radio access network EUTRAN network element.

It should be understood that the apparatus 1500 herein is embodied in a form of functional units. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described functions. In an optional example, a person skilled in the art may understand that the apparatus 1500 may be specifically the first-type access-network network element in the first network in the foregoing method embodiments, and the apparatus 1500 may be configured to perform procedures and/or steps corresponding to the first-type access-network network element in the first network in the foregoing method embodiments. To avoid repetition, details are not described herein again.

FIG. 18 shows a service processing apparatus 1600 according to an embodiment of this application. The apparatus 1600 includes:
a receiving unit 1610, configured to receive a registration request message from a terminal; and
a sending unit 1620, configured to send a registration response message to the terminal, where the registration response message always includes the third indication information, and the third indication information is used to indicate that a first network in which the apparatus is located supports an emergency service.

In an optional embodiment, the apparatus further includes a first determining unit, configured to: before the registration response message is sent to the terminal, determine that a terminal that is to initiate or has initiated the emergency service can be moved by the first network to a second-type access-network network element.

In an optional embodiment, the first determining unit is specifically configured to determine that the terminal that is to initiate or has initiated the emergency service can be handed over or redirected by the first network to the second-type access-network network element.

In an optional embodiment, the apparatus further includes a second determining unit, configured to determine that the terminal is to initiate or has initiated the emergency service, where the emergency service is to be initiated or has been initiated by the terminal based on the third indication information.

The sending unit 1620 is further configured to send fourth indication information to a first-type access-network network element that is in the first network and in which the terminal is currently located, where the fourth indication information is used to indicate that the terminal is to initiate or has initiated the emergency service, so that a procedure of moving the terminal to the second-type access-network network element is triggered.

In an optional embodiment, the receiving unit 1610 is further configured to receive a session setup request message from the terminal, where the session setup request message is used to request to set up a session for the emergency service. The second determining unit is specifically configured to determine, based on the session setup request message, that the terminal is to initiate or has initiated the emergency service.

In an optional embodiment, the receiving unit 1610 is further configured to receive a first message from a session management network element in the first network, where the first message is used to establish a user plane tunnel for the emergency service. The second determining unit is specifically configured to determine, based on the first message, that the terminal is to initiate or has initiated the emergency service.

In an optional embodiment, the sending unit 1620 is further configured to send fifth indication information to the first-type access-network network element in the first network, where the fifth indication information is used to indicate whether the apparatus supports the emergency service.

It should be understood that the apparatus 1600 herein is embodied in a form of functional units. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described functions. In an optional example, a person skilled in the art may understand that the apparatus 1600 may be specifically the core-network network element in the first network in the foregoing method embodiments, and the apparatus 1600 may be configured to perform procedures and/or steps corresponding to the core-network network element in the first network in the foregoing method embodiments. To avoid repetition, details are not described herein again.

The apparatus 1200 totally corresponds to the terminal in the embodiment of the method 100. The apparatus 1300 totally corresponds to the first-type access-network network element in the first network in the embodiment of the method 100. The apparatus 1400 totally corresponds to the core-network network element in the first network in the embodiment of the method 100. The apparatus 1500 totally corresponds to the first-type access-network network element in the first network in the method 200. The apparatus 1600 totally corresponds to the core-network network element in the first network in the method 300. A corresponding unit performs a corresponding step. For example, a transceiver unit performs a receiving/sending step in the method embodiments, and a step other than the receiving/sending step may be performed by a processing module. For a function of a specific module, refer to a corresponding method embodiment. Details are not described again.

The terminal and the network element in the foregoing solutions have functions of implementing corresponding steps performed by the first device and the second device in the foregoing methods. The functions may be implemented by hardware, or may be implemented by hardware by executing corresponding software. The hardware or the software includes one or more modules corresponding to the functions. For example, a sending unit may be replaced with a transmitter, a receiving unit may be replaced with a receiver, and another unit such as a determining unit may be replaced with a processor, to respectively perform a receiving/sending operation and a related processing operation in each method embodiment.

In the embodiments of this application, the apparatuses in FIG. 14 to FIG. 18 each may be a chip or a chip system, for example, a system on chip (System on Chip, SoC). Correspondingly, the receiving unit and the sending unit may be a transceiver circuit of the chip. This is not limited herein.

FIG. 19 shows still another service processing apparatus 1700 according to an embodiment of this application. The apparatus 1700 includes a processor 1710, a transceiver 1720, and a memory 1730. The processor 1710, the transceiver 1720, and the memory 1730 communicate with each other by using an internal connection path. The memory 1730 is configured to store an instruction. The processor 1710 is configured to execute the instruction stored in the memory 1730, to control the transceiver 1720 to send a signal and/or receive a signal.

The transceiver 1720 is configured to receive first indication information, where the first indication information is used to indicate whether at least one type of access-network network element in a first network supports an emergency service. The processor 1710 is configured to initiate the emergency service based on the first indication information and/or the second indication information.

It should be understood that the apparatus 1700 may be specifically the terminal in the embodiment of the method 100, and may be configured to perform steps and/or procedures corresponding to the terminal in the foregoing method embodiments. Optionally, the memory 1730 may include a read-only memory and a random access memory, and provide an instruction and data for the processor. A part of the memory may further include a nonvolatile random access memory. For example, the memory may further store information of a device type. The processor 1710 may be configured to execute the instruction stored in the memory. In addition, when the processor 1710 executes the instruction stored in the memory, the processor 1710 is configured to perform steps and/or procedures corresponding to the terminal in the foregoing method embodiments.

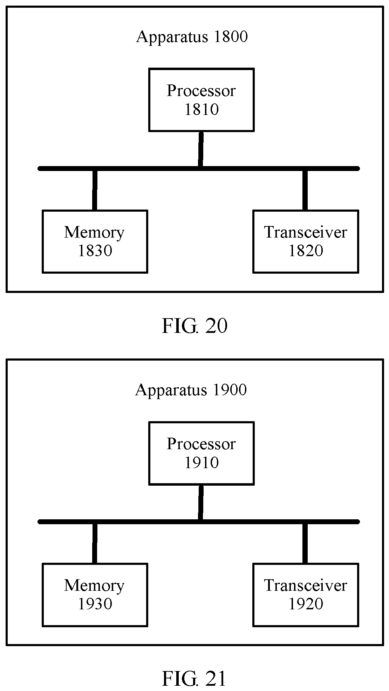

FIG. 20 shows still another service processing apparatus 1800 according to an embodiment of this application. The apparatus 1800 includes a processor 1810, a transceiver 1820, and a memory 1830. The processor 1810, the transceiver 1820, and the memory 1830 communicate with each other by using an internal connection path. The memory 1830 is configured to store an instruction. The processor 1810 is configured to execute the instruction stored in the memory 1830, to control the transceiver 1820 to send a signal and/or receive a signal.

The transceiver 1820 is configured to send first indication information to a terminal, where the first indication information is used to indicate whether the apparatus supports an emergency service, so that the terminal initiates the emergency service based on the first indication information.

It should be understood that the apparatus 1800 may be specifically the first-type access-network network element in the first network in the embodiment of the method 100, and may be configured to perform steps and/or procedures corresponding to the first-type access-network network element in the first network in the foregoing method embodiments. Optionally, the memory 1830 may include a read-only memory and a random access memory, and provide an instruction and data for the processor. A part of the memory may further include a nonvolatile random access memory. For example, the memory may further store information of a device type. The processor 1810 may be configured to execute the instruction stored in the memory. In addition, when the processor 1810 executes the instruction stored in the memory, the processor 1810 is configured to perform steps and/or procedures corresponding to the first-type access-network network element in the first network in the foregoing method embodiments.

FIG. 21 shows still another service processing apparatus 1900 according to an embodiment of this application. The apparatus 1900 includes a processor 1910, a transceiver 1920, and a memory 1930. The processor 1910, the transceiver 1920, and the memory 1930 communicate with each other by using an internal connection path. The memory 1930 is configured to store an instruction. The processor 1910 is configured to execute the instruction stored in the memory 1930, to control the transceiver 1920 to send a signal and/or receive a signal.

The transceiver 1920 is configured to send second indication information to a terminal, where the second indication information is used to indicate whether the apparatus in the first network supports an emergency service.

It should be understood that the apparatus 1900 may be specifically the core-network network element in the first network in the embodiment of the method 100, and may be configured to perform steps and/or procedures corresponding to the core-network network element in the first network in the foregoing method embodiments. Optionally, the memory 1930 may include a read-only memory and a random access memory, and provide an instruction and data for the processor. A part of the memory may further include a nonvolatile random access memory. For example, the memory may further store information of a device type. The processor 1910 may be configured to execute the instruction stored in the memory. In addition, when the processor 1910 executes the instruction stored in the memory, the processor 1910 is configured to perform steps and/or procedures corresponding to the core-network network element in the first network in the foregoing method embodiments.

Optionally, an embodiment of this application provides a service processing system, including the apparatus 1700, the apparatus 1800, and the apparatus 1900.

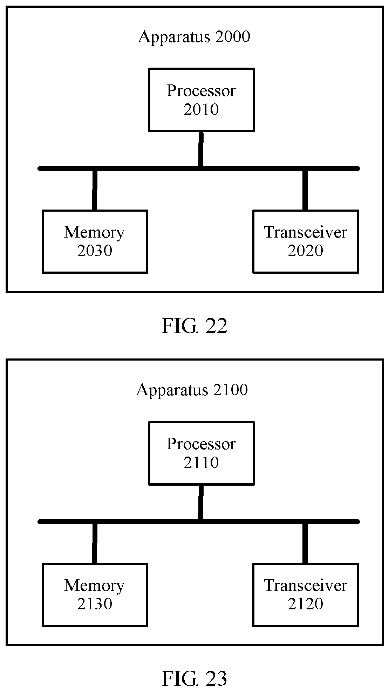

FIG. 22 shows still another service processing apparatus 2000 according to an embodiment of this application. The apparatus 2000 includes a processor 2010, a transceiver 2020, and a memory 2030. The processor 2010, the transceiver 2020, and the memory 2030 communicate with each other by using an internal connection path. The memory 2030 is configured to store an instruction. The processor 2010 is configured to execute the instruction stored in the memory 2030, to control the transceiver 2020 to send a signal and/or receive a signal.

The processor 2010 is configured to determine that a terminal is to initiate or has initiated an emergency service. The processor 2010 is further configured to trigger a procedure of moving the terminal to a second-type access-network network element.

It should be understood that the apparatus 2000 may be specifically the first-type access-network network element in the first network in the embodiment of the method 200, and may be configured to perform steps and/or procedures corresponding to the first-type access-network network element in the first network in the foregoing method embodiments. Optionally, the memory 2030 may include a read-only memory and a random access memory, and provide an instruction and data for the processor. A part of the memory may further include a nonvolatile random access memory. For example, the memory may further store information of a device type. The processor 2010 may be configured to execute the instruction stored in the memory. In addition, when the processor 2010 executes the instruction stored in the memory, the processor 2010 is configured to perform steps and/or procedures corresponding to the first-type access-network network element in the first network in the foregoing method embodiments.

FIG. 23 shows still another service processing apparatus 2100 according to an embodiment of this application. The apparatus 2100 includes a processor 2110, a transceiver 2120, and a memory 2130. The processor 2110, the transceiver 2120, and the memory 2130 communicate with each other by using an internal connection path. The memory 2130 is configured to store an instruction. The processor 2110 is configured to execute the instruction stored in the memory 2130, to control the transceiver 2120 to send a signal and/or receive a signal.

The transceiver 2120 is configured to receive a registration request message from a terminal. The transceiver 2120 is further configured to send a registration response message to the terminal, where the registration response message includes the third indication information, and the third indication information is used to indicate that a first network in which the apparatus is located always supports an emergency service.

It should be understood that the apparatus 2100 may be specifically the core-network network element in the first network in the embodiment of the method 300, and may be configured to perform steps and/or procedures corresponding to the core-network network element in the first network in the foregoing method embodiments. Optionally, the memory 2130 may include a read-only memory and a random access memory, and provide an instruction and data for the processor. A part of the memory may further include a nonvolatile random access memory. For example, the memory may further store information of a device type. The processor 2110 may be configured to execute the instruction stored in the memory. In addition, when the processor 2110 executes the instruction stored in the memory, the processor 2110 is configured to perform steps and/or procedures corresponding to the core-network network element in the first network in the foregoing method embodiments.

It should be understood that the transceiver may include a transmitter and a receiver. The transceiver may further include an antenna. There may be one or more antennas. The memory may be an independent device, or may be integrated into the processor. All or some of the foregoing components may be integrated into a chip for implementation, for example, integrated into a baseband chip for implementation.

In the embodiments of this application, the transceivers in FIG. 19 to FIG. 23 each may be a communications interface. This is not limited herein.

In the embodiments of this application, the core-network network element may be a physical entity device or a virtual function network element. This is not limited herein.

In the embodiments of this application, for ease of understanding, a plurality of examples are used for description. However, these examples are merely examples, and it does not mean that these examples are best implementations for implementing this application.

In the embodiments of this application, for ease of description, names of a request message, a response message, and various other messages are used. However, these messages are merely examples for describing content that needs to be carried or an implemented function. A specific name of a message constitutes no limitation to this application. For example, the messages may be a first message, a second message, and a third message. These messages may be specific messages, or may be some fields in the messages. These messages may also represent various service operations.

It should also be understood that in the embodiments of this application, the processor of the foregoing apparatus may be a central processing unit (central processing unit, CPU), or the processor may be another general-purpose processor, a digital signal processor (digital signal processor, DSP), an application-specific integrated circuit (application specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in a processor, or by using instructions in a form of software. The steps in the method disclosed with reference to the embodiments of this application may be directly performed by a hardware processor, or may be performed by using a combination of hardware in the processor and a software unit. The software unit may be located in a mature storage medium in the art, such as a random access memory, a flash memory, a read-only memory, a programmable read-only memory, an electrically erasable programmable memory, or a register. The storage medium is located in a memory, and the processor executes an instruction in the memory and completes the steps in the foregoing methods in combination with the hardware in the processor. To avoid repetition, details are not described herein.

The foregoing embodiments may be all or partially implemented by using software, hardware, firmware, or any combination thereof. When software is used to implement the embodiments, the embodiments may be all or partially implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer readable storage medium, or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, a solid state disk (solid state disk, SSD)), or the like.

A person of ordinary skill in the art may be aware that, in combination with the examples described in the embodiments disclosed in this specification, units and algorithm steps may be implemented by using electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps in the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. The protection scope of this application shall be subject to the protection scope of the claims.

## Claims

1. A service processing method for a terminal that is to initiate or has initiated an emergency service and that can be handed over or redirected by a first network to a second-type access-network network element, wherein the second-type access-network network element is an access-network network element in the first network or an access-network network element in a second network, wherein the emergency service is an internet protocol multimedia subsystem emergency call service, the method comprising:
receiving (S310), by a core-network network element in the first network, a registration request message from a terminal;
and
sending (S320), by the core-network network element in the first network, a registration response message to the terminal, wherein the registration response message always comprises third indication information regardless of whether the first network supports the emergency service, and the third indication information is used to indicate that the first network supports the emergency service.

2. The method according to claim 1, wherein the method further comprises:
determining, by the core-network network element in the first network, that the terminal requesting registration is to initiate or has initiated the emergency service, wherein the emergency service is to be initiated or has been initiated by the terminal based on the third indication information; and
sending, by the core-network network element in the first network, fourth indication information to a first-type access-network network element that is in the first network and in which the terminal requesting registration is currently located, wherein the fourth indication information is used to indicate that the terminal requesting registration is to initiate or has initiated the emergency service, and to trigger the first-type access-network network element to perform a procedure of moving the terminal requesting registration to the second-type access-network network element.

3. The method according to claim 2, wherein the determining, by the core-network network element in the first network, that the terminal requesting registration is to initiate or has initiated the emergency service comprises:
receiving, by the core-network network element in the first network, a session setup request message from the terminal requesting registration, wherein the session setup request message is used to request to set up a session for the emergency service; and
determining, by the core-network network element in the first network based on the session setup request message, that the terminal requesting registration is to initiate or has initiated the emergency service.

4. The method according to claim 2, wherein the determining, by the core-network network element in the first network, that the terminal requesting registration is to initiate or has initiated the emergency service comprises:
receiving, by the core-network network element in the first network, a first message from a session management network element in the first network, wherein the first message is used to establish a user plane tunnel for the emergency service; and
determining, by the core-network network element in the first network based on the first message, that the terminal requesting registration is to initiate or has initiated the emergency service.

5. The method according to any one of claims 1 to 4, wherein the method further comprises:
sending, by the core-network network element in the first network, fifth indication information to the first-type access-network network element in the first network, wherein the fifth indication information is used to indicate whether the core-network network element in the first network supports the emergency service.

6. The method according to any one of claims 1 to 5, wherein the emergency service is an internet protocol multimedia subsystem, IMS, emergency call service.

7. The method according to any one of claims 1 to 6, wherein the first network is a fifth-generation, 5G, network, the second-type access-network network element is an evolved universal mobile telecommunications system terrestrial radio access network, EUTRAN, network element.

8. A service processing apparatus (1900), comprising a processor (1910), wherein the processor (1910) is coupled to a memory (1930);
the memory (1930) is configured to store a computer program; and
the processor (1910) is configured to execute the computer program stored in the memory (1930), to enable the apparatus to perform the steps in the method according to any one of claims 1 to 7.

9. A computer readable medium, configured to store a computer program, wherein the computer program comprises an instruction, when the instruction runs on a computer, the computer is enabled to implement the method according to any one of claims 1 to 7.

10. A system, comprising:
a core-network network element in a first network, configured to perform the steps in the method according to any one of claims 1 to 7; and
a first-type access-network network element connected with the core-network network element.

## Patentansprüche

1. Dienstverarbeitungsverfahren für ein Endgerät, das einen Notdienst auslösen soll oder ausgelöst hat und das durch ein erstes Netzwerk an ein Zugangsnetzwerk-Netzwerkelement der zweiten Art übergeben oder umgeleitet werden kann, wobei das Zugangsnetzwerk-Netzwerkelement der zweiten Art ein Zugangsnetzwerk-Netzwerkelement in dem ersten Netzwerk oder ein Zugangsnetzwerk-Netzwerkelement in einem zweiten Netzwerk ist, wobei der Notdienst ein Notrufdienst eines Internetprotokoll-Multimedia-Teilsystems ist, wobei das Verfahren Folgendes umfasst:
Empfangen (S310) einer Registrierungsanfragenachricht von einem Endgerät durch ein Kernnetzwerk-Netzwerkelement in dem ersten Netzwerk,
und
Senden (S320) einer Registrierungsantwortnachricht an das Endgerät durch das Kernnetzwerk-Netzwerkelement in dem ersten Netzwerk, wobei die Registrierungsantwortnachricht ungeachtet dessen, ob das erste Netzwerk den Notdienst unterstützt, stets dritte Angabeinformationen umfasst und die dritten Angabeinformationen dazu verwendet werden, anzugeben, dass das erste Netzwerk den Notdienst unterstützt.

2. Verfahren nach Anspruch 1, wobei das Verfahren ferner Folgendes umfasst:
Bestimmen, dass das Endgerät, das um Registrierung anfragt, den Notdienst auslösen soll oder ausgelöst hat, durch das Kernnetzwerk-Netzwerkelement in dem ersten Netzwerk, wobei der Notdienst durch das Endgerät basierend auf den dritten Angabeinformationen auszulösen ist oder ausgelöst wurde, und
Senden vierter Angabeinformationen an ein Zugangsnetzwerk-Netzwerkelement einer ersten Art, das sich in dem ersten Netzwerk befindet und in dem sich das Endgerät, das um Registrierung anfragt, gegenwärtig befindet, durch das Kernnetzwerk-Netzwerkelement in dem ersten Netzwerk, wobei die vierten Angabeinformationen dazu verwendet werden, anzugeben, dass das Endgerät, das um Registrierung anfragt, den Notdienst auslösen soll oder ausgelöst hat, und das Zugangsnetzwerk-Netzwerkelement der ersten Art anzusteuern, um einen Vorgang des Bewegens des Endgerätes, das um Registrierung anfragt, zu dem Zugangsnetzwerk-Netzwerkelement der zweiten Art durchzuführen.

3. Verfahren nach Anspruch 2, wobei das Bestimmen, dass das Endgerät, das um Registrierung anfragt, den Notdienst auslösen soll oder ausgelöst hat, durch das Kernnetzwerk-Netzwerkelement in dem ersten Netzwerk Folgendes umfasst:
Empfangen einer Sitzungsaufbauanfragenachricht von dem Endgerät, das um Registrierung anfragt, durch das Kernnetzwerk-Netzwerkelement in dem ersten Netzwerk, wobei die Sitzungsaufbauanfragenachricht verwendet wird, um eine Sitzung für einen Notdienst aufzubauen, und
Bestimmen basierend auf der Sitzungsaufbauanfragenachricht, dass das Endgerät, das um Registrierung anfragt, den Notdienst auslösen soll oder ausgelöst hat, durch das Kernnetzwerk-Netzwerkelement in dem ersten Netzwerk.

4. Verfahren nach Anspruch 2, wobei das Bestimmen, dass das Endgerät, das um Registrierung anfragt, den Notdienst auslösen soll oder ausgelöst hat, durch das Kernnetzwerk-Netzwerkelement in dem ersten Netzwerk Folgendes umfasst:
Empfangen einer ersten Nachricht von einem Sitzungsverwaltungs-Netzwerkelement in dem ersten Netzwerk durch das Kernnetzwerk-Netzwerkelement in dem ersten Netzwerk, wobei die erste Nachricht verwendet wird, um einen Benutzerebenentunnel für den Notdienst einzurichten, und
Bestimmen basierend auf der ersten Nachricht, dass das Endgerät, das um Registrierung anfragt, den Notdienst einrichten soll oder eingerichtet hat, durch das Kernnetzwerk-Netzwerkelement in dem ersten Netzwerk.

5. Verfahren nach einem der Ansprüche 1 bis 4, wobei das Verfahren ferner Folgendes umfasst:
Senden fünfter Angabeinformationen an das Zugangsnetzwerk-Netzwerkelement der ersten Art in dem ersten Netzwerk durch das Kernnetzwerk-Netzwerkelement in dem ersten Netzwerk, wobei die fünften Angabeinformationen dazu verwendet werden, anzugeben, ob das Kernnetzwerk-Netzwerkelement in dem ersten Netzwerk den Notdienst unterstützt.

6. Verfahren nach einem der Ansprüche 1 bis 5, wobei der Notdienst ein Notrufdienst eines Internetprotokoll-Multimedia-Teilsystems, IMS, ist.

7. Verfahren nach einem der Ansprüche 1 bis 6, wobei das erste Netzwerk ein Netzwerk der fünften Generation, 5G, ist, das Zugangsnetzwerk-Netzwerkelement der zweiten Art ein EUTRAN-, "Evolved Universal Mobile Telecommunication System Terrestrial Access Network"-, Netzwerkelement ist.

8. Dienstverarbeitungsvorrichtung (1900), einen Prozessor (1910) umfassend, wobei der Prozessor (1910) mit einem Speicher (1930) gekoppelt ist,
der Speicher (1930) dafür konfiguriert ist, ein Computerprogramm zu speichern, und der Prozessor (1910) dafür konfiguriert ist, das in dem Speicher (1930) gespeicherte Computerprogramm auszuführen, um die Vorrichtung in die Lage zu versetzen, die Schritte des Verfahrens nach einem der Ansprüche 1 bis 7 durchzuführen.

9. Computerlesbares Medium, das dafür konfiguriert ist, ein Computerprogramm zu speichern, wobei das Computerprogramm einen Befehl umfasst, wobei, wenn der Befehl auf einem Computer abgearbeitet wird, der Computer in die Lage versetzt ist, das Verfahren nach einem der Ansprüche 1 bis 7 zu implementieren.

10. System, Folgendes umfassend:
ein Kernnetzwerk-Netzwerkelement in einem ersten Netzwerk, das dafür konfiguriert ist, die Schritte in dem Verfahren nach einem der Ansprüche 1 bis 7 durchzuführen, und
ein Zugangsnetzwerk-Netzwerkelement der ersten Art, das mit dem Kernnetzwerk-Netzwerkelement verbunden ist.

## Revendications

1. Procédé de traitement de service pour un terminal qui doit lancer ou qui a lancé un service d'urgence et qui peut être transféré ou redirigé par un premier réseau vers un élément de réseau de réseau d'accès de second type, l'élément de réseau de réseau d'accès de second type étant un élément de réseau de réseau d'accès dans le premier réseau ou un élément de réseau de réseau d'accès dans un deuxième réseau, le service d'urgence étant un service d'appel d'urgence de sous-système multimédia à protocole Internet, le procédé comprenant les étapes suivantes :
recevoir (S310), par un élément de réseau de réseau central dans le premier réseau, un message de demande d'enregistrement provenant d'un terminal ; et
envoyer (S320), par l'élément de réseau de réseau central dans le premier réseau, un message de réponse d'enregistrement au terminal, le message de réponse d'enregistrement comprenant toujours des troisièmes informations d'indication indépendamment du fait que le premier réseau supporte ou non le service d'urgence, et les troisièmes informations d'indication étant utilisées pour indiquer que le premier réseau supporte le service d'urgence.

2. Procédé selon la revendication 1, le procédé comprenant en outre les étapes suivantes :
déterminer, par l'élément de réseau de réseau central dans le premier réseau, que le terminal demandant l'enregistrement doit lancer ou a lancé le service d'urgence, le service d'urgence devant être lancé ou ayant été lancé par le terminal sur la base des troisièmes informations d'indication ; et
envoyer, par l'élément de réseau de réseau central dans le premier réseau, des quatrièmes informations d'indication à un élément de réseau de réseau d'accès de premier type qui est dans le premier réseau et dans lequel le terminal demandant l'enregistrement est actuellement situé, les quatrièmes informations d'indication étant utilisées pour indiquer que le terminal demandant l'enregistrement doit lancer ou a lancé le service d'urgence, et pour déclencher l'élément de réseau de réseau d'accès de premier type pour exécuter une procédure de déplacement du terminal demandant l'enregistrement vers l'élément de réseau de réseau d'accès de second type.

3. Procédé selon la revendication 2, dans lequel la détermination, par l'élément de réseau de réseau central dans le premier réseau, que le terminal demandant l'enregistrement doit lancer ou a lancé le service d'urgence comprend les étapes suivantes :
recevoir, par l'élément de réseau de réseau central dans le premier réseau, un message de demande d'établissement de session provenant du terminal demandant l'enregistrement, le message de demande d'établissement de session étant utilisé pour demander d'établir une session pour le service d'urgence ; et
déterminer, par l'élément de réseau de réseau central dans le premier réseau sur la base du message de demande d'établissement de session, que le terminal demandant l'enregistrement doit lancer ou a lancé le service d'urgence.

4. Procédé selon la revendication 2, dans lequel la détermination, par l'élément de réseau de réseau central dans le premier réseau, que le terminal demandant l'enregistrement doit lancer ou a lancé le service d'urgence comprend les étapes suivantes :
recevoir, par l'élément de réseau de réseau central dans le premier réseau, un premier message provenant d'un élément de réseau de gestion de session dans le premier réseau, le premier message étant utilisé pour établir un tunnel de plan utilisateur pour le service d'urgence ; et
déterminer, par l'élément de réseau de réseau central dans le premier réseau sur la base du premier message, que le terminal demandant l'enregistrement doit lancer ou a lancé le service d'urgence.

5. Procédé selon l'une quelconque des revendications 1 à 4, le procédé comprenant en outre les étapes suivantes :
envoyer, par l'élément de réseau de réseau central dans le premier réseau, des cinquièmes informations d'indication à l'élément de réseau de réseau d'accès de premier type dans le premier réseau, les cinquièmes informations d'indication étant utilisées pour indiquer si l'élément de réseau de réseau central dans le premier réseau supporte le service d'urgence.

6. Procédé selon l'une quelconque des revendications 1 à 5, dans lequel le service d'urgence est un service d'appel d'urgence de sous-système multimédia à protocole Internet, IMS.

7. Procédé selon l'une quelconque des revendications 1 à 6, dans lequel le premier réseau est un réseau de cinquième génération, 5G, l'élément de réseau de réseau d'accès de second type est un élément de réseau de réseau d'accès radio terrestre du système universel évolué de télécommunication mobile, EUTRAN.

8. Appareil de traitement de services (1900), comprenant un processeur (1910), le processeur (1910) étant couplé à une mémoire (1930) ;
la mémoire (1930) étant configurée pour stocker un programme informatique ; et
le processeur (1910) étant configuré pour exécuter le programme informatique stocké dans la mémoire (1930), pour permettre à l'appareil d'exécuter les étapes dans le procédé selon l'une quelconque des revendications 1 à 7.

9. Support lisible par ordinateur, configuré pour stocker un programme informatique, le programme informatique comprenant une instruction et, lorsque l'instruction est exécutée sur un ordinateur, l'ordinateur étant autorisé à mettre en œuvre le procédé selon l'une quelconque des revendications 1 à 7.

10. Système comprenant :
un élément de réseau de réseau central dans un premier réseau, configuré pour exécuter les étapes dans le procédé selon l'une quelconque des revendications 1 à 7 ; et
un élément de réseau de réseau d'accès de premier type connecté à l'élément de réseau de réseau central.
